# EUROPEAN PATENT APPLICATION

(11) **EP 4 811 906 A1**
(43) Date of publication of application: **23.09.2026**
(21) Application number: 24919300.4
(22) Date of filing: 25.01.2024
(51) Int. Cl.: H04W 72/21

(54) **UPLINK TRANSMISSION METHOD AND APPARATUS, DEVICE, STORAGE MEDIUM, AND CHIP**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN)
(74) Representative: Novagraaf Technologies
(86) International application number: PCT/CN2024/074001
(87) International publication number: WO 2025/156187

(57) **Abstract**

An uplink transmission method and apparatus, a device, a storage medium, and a chip, relating to the technical field of mobile communications. The method is executed by an A-loT device, and comprises: performing access transmission with a network device by means of an uplink resource corresponding to a communication type of the A-IoT device (601), wherein uplink resources corresponding to different communication types do not overlap. According to the described solution, transmission interference during uplink access transmission by a large amount of A-IoT devices can be avoided as much as possible, thereby reducing the occurrence of access transmission failures for A-IoT devices and improving the efficiency of access transmission by A-IoT devices.

## Description

### TECHNICAL FIELD

The present disclosure relates to the technical field of mobile communication, and particularly to uplink transmission methods and apparatuses, devices, a storage medium, and a chip.

### RELATED ART

In the new radio (NR) system and wireless fidelity (Wi-Fi) system, low-cost, large-scale deployment and maintenance-free of ambient Internet of things (A-IoT) devices can be supported.

In the NR system and Wi-Fi system, a large number of A-IoT devices may be densely deployed within a single space. When these numerous A-IoT devices engage in uplink transmission, they can cause severe transmission interference and transmission failures.

### SUMMARY

Embodiments of the present disclosure provide uplink transmission methods and apparatuses, devices, a storage medium, and a chip. The technical solutions are as follows.

In an aspect, embodiments of the present disclosure provide an uplink transmission method, which is performed by an A-IoT device. The method includes: performing access transmission with a network device through an uplink resource corresponding to the communication type of the A-IoT device; wherein uplink resources corresponding to different communication types do not overlap.

In another aspect, embodiments of the present disclosure provide an uplink transmission method, which is performed by a network device. The method includes: receiving access transmission performed by an A-IoT device through an uplink resource corresponding to a communication type of the A-IoT device; wherein uplink resources corresponding to different communication types do not overlap.

In another aspect, embodiments of the present disclosure provide an uplink transmission method, which is performed by an A-IoT device. The method includes: indicating a communication type of an A-IoT device to a network device during an access transmission process with the network device.

In another aspect, embodiments of the present disclosure provide an uplink transmission method, which is performed by a network device. The method includes: obtaining a communication type of an A-IoT device indicated by the A-IoT device during an access transmission process with a network device.

In another aspect, embodiments of the present disclosure provide an uplink transmission apparatus. The apparatus includes: a transmitting module, configured to perform access transmission with a network device through an uplink resource corresponding to the communication type of an A-IoT device; wherein uplink resources corresponding to different communication types do not overlap.

In another aspect, embodiments of the present disclosure provide an uplink transmission apparatus. The apparatus includes: a receiving module, configured to receive access transmission performed by an A-IoT device through an uplink resource corresponding to a communication type of the A-IoT device; wherein uplink resources corresponding to different communication types do not overlap.

In another aspect, embodiments of the present disclosure provide an uplink transmission apparatus. The apparatus includes: a communication type indicating module, configured to indicate a communication type of an A-IoT device to a network device during an access transmission process with the network device.

In another aspect, embodiments of the present disclosure provide an uplink transmission apparatus. The apparatus includes: a communication type obtaining module, configured to obtain a communication type of an A-IoT device indicated by the A-IoT device during an access transmission process with a network device.

In another aspect, embodiments of the present disclosure provide an A-IoT device. The A-IoT device includes a processor, a memory, and a transceiver; wherein the memory stores computer programs, and the processor runs the computer programs to cause the A-IoT device to perform the uplink transmission method performed by the A-IoT device as described above.

In another aspect, embodiments of the present disclosure provide a network device. The network device includes a processor, a memory, and a transceiver; wherein the memory stores computer programs, and the processor runs the computer programs to cause the network device to perform the uplink transmission method performed by the network device as described above.

In another aspect, embodiments of the present disclosure further provide a computer-readable storage medium, in which computer programs are stored. The computer programs are loaded and run by a processor to perform the aforementioned uplink transmission method.

In another aspect, the present disclosure also provides a chip. The chip includes integrated circuitry and application programs. The chip, when operating on a communication device, causes the communication device to perform the aforementioned uplink transmission method.

In another aspect, the present disclosure provides a computer program product, which includes computer instructions stored in a computer-readable storage medium. A processor of a communication device reads the computer instructions from the computer-readable storage medium and executes the computer instructions, so that the communication device performs the aforementioned uplink transmission method.

In another aspect, the present disclosure provides a computer program run by a processor of a communication device to perform the aforementioned uplink transmission method.

The embodiments of the present disclosure provide an uplink transmission solution. The A-IoT device performs access transmission with the network device through the uplink resource corresponding to the communication type of the A-IoT device, and the uplink resources corresponding to different communication types do not overlap. That is to say, through the above solution, A-IoT devices of different communication types use non-overlapping uplink resources for access transmission, thereby avoiding transmission interference as much as possible when a large number of A-IoT devices perform uplink access transmission, reducing the failure rate of access transmission performed by the A-IoT device, and improving the efficiency of access transmission performed by the A-IoT device.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a schematic diagram of an architecture of a communication system according to some embodiments of the present disclosure;
FIG. 2 is a principle diagram of zero-power communication involved in the present disclosure;
FIG. 3 is a principle diagram of radio frequency power harvesting involved in the present disclosure;
FIG. 4 is a principle diagram of backscattering communication involved in the present disclosure;
FIG. 5 is a circuit principle diagram of resistive load modulation involved in the present disclosure;
FIG. 6 is a flowchart of an uplink transmission method according to some embodiments of the present disclosure;
FIG. 7 is a flowchart of an uplink transmission method according to some embodiments of the present disclosure;
FIG. 8 is a flowchart of an uplink transmission method according to some embodiments of the present disclosure;
FIG. 9 is a flowchart of an uplink transmission method according to some embodiments of the present disclosure;
FIG. 10 is a flowchart of an uplink transmission method according to some embodiments of the present disclosure;
FIG. 11 is a schematic diagram of resource configuration for a system message involved in the present disclosure;
FIG. 12 is a schematic diagram of resource configuration for a system message involved in the present disclosure;
FIG. 13 is a schematic diagram of resource configuration for a system message involved in the present disclosure;
FIG. 14 is a block diagram of an uplink transmission apparatus according to some embodiments of the present disclosure;
FIG. 15 is a block diagram of an uplink transmission apparatus according to some embodiments of the present disclosure;
FIG. 16 is a block diagram of an uplink transmission apparatus according to some embodiments of the present disclosure;
FIG. 17 is a block diagram of an uplink transmission apparatus according to some embodiments of the present disclosure; and
FIG. 18 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with the evolution of the network architecture and emergence of new service scenarios, the technical solutions according to the embodiments of the present disclosure are also applicable to similar technical problems.

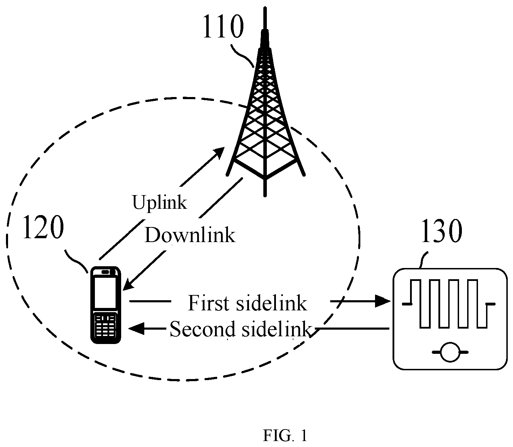

FIG. 1 illustrates a schematic diagram of a communication system involved in exemplary embodiments of the present disclosure. The communication system includes a network device 110, a terminal device 120, and an A-IoT device 130, which are not limited by the present disclosure.

The network device 110 in the present disclosure provides wireless communication functions, and includes but is not limited to: evolved Node B (eNB), radio network controller (RNC), node B (NB), base station controller (BSC), base transceiver station (BTS), home evolved Node B (or Home Node B, HNB), baseband unit (BBU), access point (AP) in a Wi-Fi system, wireless relay node, wireless backhaul node, transmission point (TP), or transmission and reception point (TRP), etc. It may also be a next generation Node B (gNB) or transmission point (TRP or TP) in the 5th generation (5G) mobile communication system, or one or a group of antenna panels (including a plurality of antenna panels) of a base station in the 5G system, or a network node constituting a gNB or transmission point, such as a baseband unit (BBU) or distributed unit (DU), etc. It can also refer to a base station in the beyond fifth generation (B5G) or 6th generation (6G) mobile communication systems, or a core network (CN), fronthaul, backhaul, radio access network (RAN), network slicing, etc., or the serving cell, primary cell (PCell), primary secondary cell (PSCell), special cell (SpCell), secondary cell (SCell), neighboring cell, etc. of a terminal device.

In the present disclosure, the terminal device 120, also referred to as user equipment (UE), an access terminal, a subscriber unit, a subscriber station, a mobile station, a remote station, a remote terminal, a mobile device, a user terminal, a terminal, a wireless communication device, a user agent, or a user device, includes but is not limited to: handheld devices, wearable devices, in-vehicle devices, and Internet of Things devices, such as mobile phones, tablet computers, e-book readers, laptop computers, desktop computers, televisions, game consoles, mobile internet devices (MID), augmented reality (AR) terminals, virtual reality (VR) terminals, and mixed reality (MR) terminals, wearable devices, gamepads, electronic tags, controllers, wireless terminals in industrial control, autonomous driving, remote medical, smart grid, transportation safety, smart city, smart home (such as smart TVs, routers, smart speakers, etc.), remote medical surgery, cellular phones, cordless phones, Session Initiation Protocol (SIP) phones, wireless local loop (WLL) stations, personal digital assistants (PDA), set-top boxes (STB), customer premise equipment (CPE), etc.

The network device 110 and the terminal device 120 communicate with each other via an air interface technology, such as a Uu interface.

Illustratively, there are two communication scenarios between the network device 110 and the terminal device 120: an uplink communication scenario and a downlink communication scenario. The uplink communication refers to transmitting signals to the network device 110, while the downlink communication refers to transmitting signals to the terminal device 120.

The terminal device 120 communicates with another terminal device via an air interface technology, such as a PC5 interface.

In some embodiments, there are two communication scenarios between the terminal device 120 and another terminal device: a first sidelink communication scenario and a second sidelink communication scenario. The first sidelink communication refers to transmitting signals to another terminal device; and the second sidelink communication refers to transmitting signals to the terminal device 120.

The terminal device 120 and another terminal device are all within the network coverage and located in the same cell, or the terminal device 120 and another terminal device are all within the network coverage but located in different cells, or the terminal device 120 is within the network coverage but another terminal device is outside the network coverage.

The A-IoT device 130 is a zero-power device based on radio frequency identification (RFID).

The A-IoT devices refer to devices that utilize various ambient energies such as wireless radio frequency energy, light energy, solar energy, thermal energy, mechanical energy, and other ambient energies. Such devices may not have energy storage capability, or may have very limited energy storage capability (such as using capacitors with a capacity of tens of uF).

In some embodiments, the A-IoT devices can constitute ambient power enabled IoT, referred to as A-IoT.

The technical solutions provided in the embodiments of the present disclosure can be applied to various communication systems, such as the global system for mobile communications (GSM) system, the code division multiple access (CDMA) system, the wideband code division multiple access (WCDMA) system, the general packet radio service (GPRS), the long term evolution (LTE) system, the LTE frequency division duplex (FDD) system, the LTE time division duplex (TDD) system, the advanced long term evolution (LTE-A) system, the universal mobile telecommunication system (UMTS), the worldwide interoperability for microwave access (WiMAX) communication system, the 5G mobile communication system, the NR system, the evolved system of the NR system, the LTE-based access to unlicensed spectrum (LTE-U) system on unlicensed spectrum, the NR-based access to unlicensed spectrum (NR-U) system on unlicensed spectrum, the terrestrial networks (TN) system, the non-terrestrial networks (NTN) system, the wireless local area networks (WLAN), the Wi-Fi, the cellular Internet of Things (IoT) system, and the cellular passive IoT system. They can also be applied to the subsequent evolved systems of the 5G NR system, as well as to B5G, 6G, and subsequent evolved systems. In some embodiments of the present disclosure, "NR" can also be referred to as the 5G NR system or the 5G system. The 5G mobile communication system can include non-standalone (NSA) and/or standalone (SA) networking.

The technical solutions provided in the embodiments of the present disclosure can also be applied to machine type communication (MTC), long term evaluation-machine (LTE-M), device to device (D2D) networks, machine to machine (M2M) networks, IoT networks, or other networks. Among them, IoT networks can include, for example, the Internet of vehicles (IoV). The communication modes in the IoV system are collectively referred to as vehicle to X (V2X, where X can represent anything), such as vehicle to vehicle (V2V) communication, vehicle to infrastructure (V2I) communication, vehicle to pedestrian (V2P) communication, or vehicle to network (V2N) communication.

### 1) A-IoT communication technology

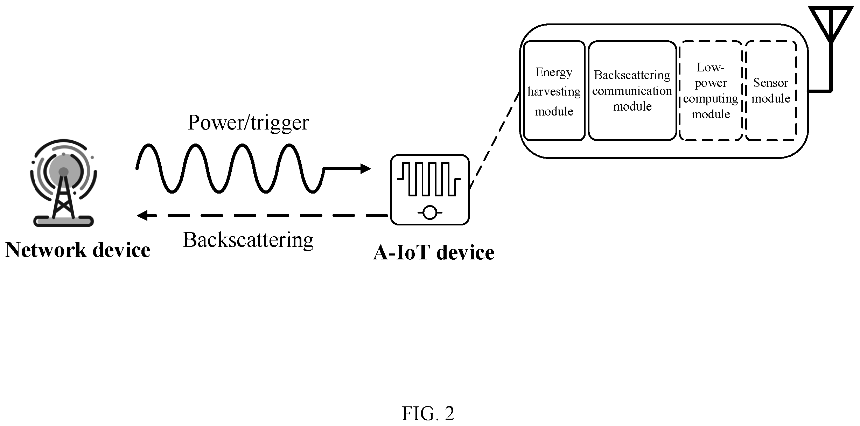

A-IoT communication may utilize energy harvesting and backscattering communication technologies. The A-IoT communication network consists of the network device and the A-IoT device, as illustrated in FIG. 2, which shows the structural diagram of the A-IoT communication system involved in the present disclosure. The network device is utilized to transmit wireless power supply signals and downlink communication signals to the A-IoT device, and receives backscatter signals from the A-IoT device. A basic A-IoT device includes an energy harvesting module, a backscattering communication module, and a low-power computing module. Furthermore, the A-IoT device may also include a memory or sensor for storing essential information (such as item identifiers) or obtaining sensing data like environmental temperature and humidity.

The key technologies of the A-IoT communication mainly include radio frequency power harvesting and backscattering communication.

### - Radio Frequency Power Harvesting

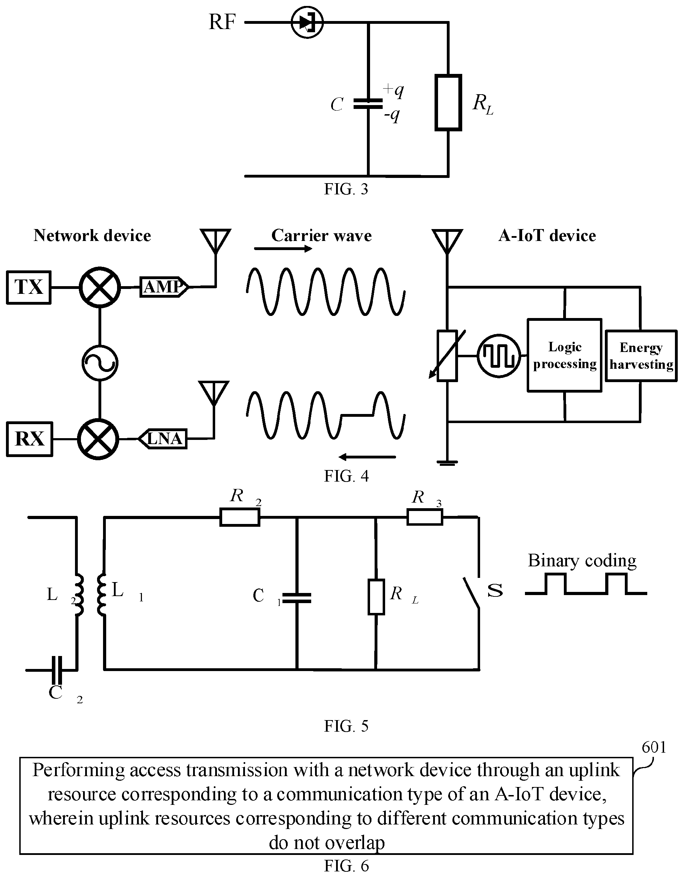

Please refer to FIG. 3, which illustrates the principle diagram of radio frequency power harvesting involved in the present disclosure. As shown in FIG. 3, the radio frequency power harvesting module harvests spatial electromagnetic wave energy based on the principle of electromagnetic induction, thereby obtaining the energy required for driving the A-IoT device, such as driving the low-power demodulation and modulation module, the sensor, and memory reading. Therefore, the A-IoT device does not require traditional batteries.

### - Backscattering Communication

Please refer to FIG. 4, which illustrates the principle diagram of backscattering communication involved in the present disclosure. As shown in FIG. 4, the A-IoT device receives wireless signals transmitted by the network, modulates the wireless signals, loads the information to be transmitted, and radiates the modulated signals from the antenna. This information transmission process is called backscattering communication. Backscattering and the load modulation function are inseparable. Load modulation adjusts and controls the circuit parameters of the oscillating loop of the A-IoT device according to the beat of the data stream, so that parameters such as the impedance of the electronic tag change accordingly, thereby completing the modulation process. Load modulation technology mainly includes two methods: resistive load modulation and capacitive load modulation. In resistive load modulation, a resistor is connected in parallel to the load, and the resistor is turned on or off based on the control of binary data streams. Please refer to FIG. 5, which illustrates the circuit principle diagram of resistive load modulation involved in the present disclosure. The on-off state of the resistor causes changes in circuit voltage, thus achieving amplitude-shift keying (ASK), which modulates and transmits signals by adjusting the amplitude of the backscatter signal from the A-IoT device. Similarly, in capacitive load modulation, the on-off state of the capacitor causes changes in the resonant frequency of the circuit, achieving frequency-shift keying (FSK), which modulates and transmits signals by adjusting the operating frequency of the backscatter signal from the A-IoT device.

It can be seen that the A-IoT device performs information modulation on the incoming wave signal through load modulation, thus achieving the backscattering communication process. Therefore, the A-IoT device has the following significant advantages.
(1) The A-IoT device does not actively transmit signals, thus eliminating the need for complex radio frequency chains such as power amplifiers (PA) and radio frequency filters.
(2) The A-IoT device does not need to actively generate high-frequency signals, hence they do not require high-frequency crystal oscillators.
(3) With the help of backscattering communication, terminal signal transmission does not require the consumption of energy from the A-IoT device itself.

### 2) Classification of A-IoT devices

Based on the current discussions in 3rd Generation Partnership Project (3GPP), A-IoT devices may be categorized into the following two types based on their energy storage capabilities and whether they possess the ability to generate RF signals for signal transmission.

Device type 1: With the transmit power of approximately 1 uW, it possesses energy storage capability but lacks independent signal generation and uplink/downlink signal amplification functions, and signal transmission is achieved using backscattering.

Device type 2: With the transmit power of several hundred uW, it features energy storage and uplink and downlink signal amplification capabilities., and can generate signals independently or transmit signals using backscattering.

In the discussion process of standardization, the A-IoT may also be referred to as zero-power IoT, and may also be called passive IoT in some technical literature. A-IoT devices refer to IoT devices that use various environmental energies, such as wireless radio frequency energy, light energy, solar energy, thermal energy, mechanical energy, and other environmental energies, to drive themselves. Such devices may have no energy storage capacity or very limited energy storage capacity (such as using capacitors with a capacity of tens of uF). A-IoT devices have many advantages, such as being free from conventional batteries, maintenance-free, small in size, low complexity and cost, long lifespan, and so on.

### 3) A-IoT industrial applications, use cases, and business models

A-IoT supports many industrial applications, such as automated warehousing, smart home, smart agriculture, and finding personal belongings.

Automated Warehousing: The inventory scenario of automated warehouses encompasses a plurality of stages, including verification and unloading, warehousing, inventory checking, ex-warehousing, and inspection and packaging. As goods are transferred, stored, and inventoried, a vast amount of warehousing information is generated. This information typically features frequent data read operations and a large data volume. The A-IoT devices are attached to items of varying value and usage, such as pallet containers and individual products, and relevant communication equipment is deployed. Through the exchange of information between communication devices and tags, accurate and rapid inventory and storage information management can be efficiently achieved at each stage.

For automated warehousing, 3GPP has defined a use case for inventory, the purpose of which is to discover which goods (such as boxes, drawers, parcels, tools, etc.) exist within a specific area. Upon receiving a request from the network within a specific area, the A-IoT devices attached to these goods report their associated identifiers to the network, and may also append some other information, such as status information, measurement results, and position information. In terms of business mode, it belongs to the DO-DTT mode, which is short for device originated-device terminated triggered.

A-IoT devices used in warehouse logistics may adopt various types, such as backscattering communication type and active transmission communication type. When the network initiates inventory requests/polling requests/paging messages, how A-IoT devices select uplink transmission resources is a problem that needs to be addressed. If all devices choose to transmit on the same uplink carrier wave, it will cause severe transmission interference and transmission failures.

The subsequent embodiments of the present disclosure design a solution for uplink access transmission of A-IoT devices, which can improve the efficiency of access transmission for A-IoT devices.

Please refer to FIG. 6, which illustrates a flowchart of an uplink transmission method according to some embodiments of the present disclosure. This method is performed by an A-IoT device. The aforementioned A-IoT device may be the A-IoT device 130 in the network architecture shown in FIG. 1. The method may include the following step.

Step 601: Performing access transmission with the network device through the uplink resource corresponding to the communication type of the A-IoT device, wherein the uplink resources corresponding to different communication types do not overlap.

The aforementioned access transmission may also refer to the network access initiated by the A-IoT device to the network device, such as random access. The aforementioned access transmission process between the A-IoT device and the network device may also be referred to as the random access process initiated by the A-IoT device to the network device.

The aforementioned communication types may include one or both of a backscattering communication type and an active transmission communication type. For A-IoT devices of different communication types, the uplink resources used for access transmission with network devices do not overlap.

The aforementioned uplink resources do not overlap, which may mean that the two uplink resources are completely different or partially different.

In summary, according to the solution in the embodiments of the present disclosure, the A-IoT device performs access transmission with the network device through the uplink resource corresponding to the communication type of the A-IoT device, and the uplink resources corresponding to different communication types do not overlap. That is to say, through the above solution, A-IoT devices of different communication types use non-overlapping uplink resources for access transmission, thereby avoiding transmission interference as much as possible when a large number of A-IoT devices perform uplink access transmission, reducing the failure rate of access transmission performed by the A-IoT device, and improving the efficiency of access transmission performed by the A-IoT device.

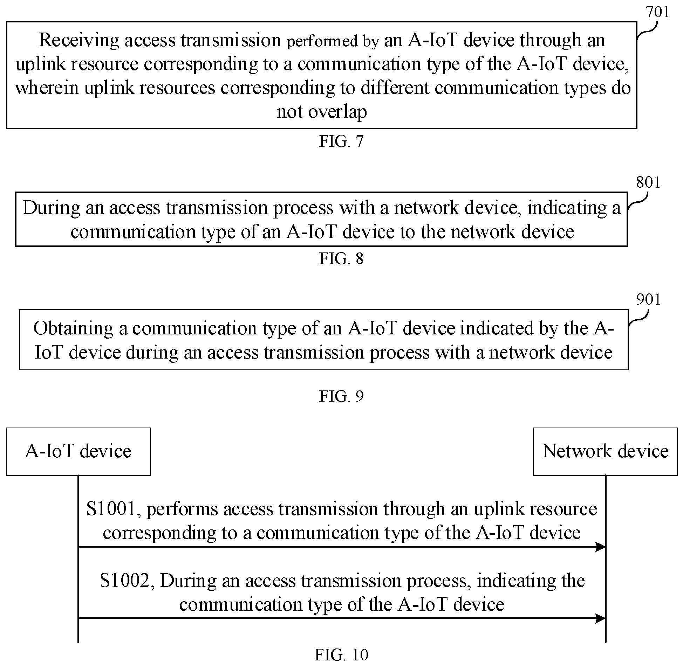

Please refer to FIG. 7, which illustrates a flowchart of an uplink transmission method according to some embodiments of the present disclosure. The method is performed by a network device. The network device may be the network device 110 in the network architecture shown in FIG. 1. The method may include the following step.

Step 701: Receiving the access transmission performed by the A-IoT device through the uplink resource corresponding to the communication type of the A-IoT device, wherein the uplink resources corresponding to different communication types do not overlap.

In summary, according to the solution in the embodiments of the present disclosure, the A-IoT device performs access transmission with the network device through the uplink resource corresponding to the communication type of the A-IoT device, and the uplink resources corresponding to different communication types do not overlap. That is to say, through the above solution, A-IoT devices of different communication types use non-overlapping uplink resources for access transmission, thereby avoiding transmission interference as much as possible when a large number of A-IoT devices perform uplink access transmission, reducing the failure rate of access transmission performed by the A-IoT device, and improving the efficiency of access transmission performed by the A-IoT device.

Please refer to FIG. 8, which illustrates a flowchart of an uplink transmission method according to some embodiments of the present disclosure. This method is performed by an A-IoT device. The aforementioned A-IoT device may be the A-IoT device 130 in the network architecture shown in FIG. 1. The method may include the following step.

Step 801: During the access transmission process with the network device, indicating the communication type of the A-IoT device to the network device.

In summary, according to the solution in the embodiments of the present disclosure, the A-IoT device indicates its communication type to the network device during the access transmission process with the network device. This enables the network device to promptly recognize the communication type of the accessed A-IoT device, and subsequently communicate with the A-IoT device through the corresponding communication type, thereby enhancing the efficiency and accuracy of A-IoT communication between the A-IoT device and the network device.

Please refer to FIG. 9, which illustrates a flowchart of an uplink transmission method according to some embodiments of the present disclosure. The method is performed by a network device. The aforementioned network device may be the network device 110 in the network architecture shown in FIG. 1. The method may include the following step.

Step 901: Obtaining the communication type of the A-IoT device indicated by the A-IoT device during the access transmission process with the network device.

In summary, according to the solution in the embodiments of the present disclosure, the A-IoT device indicates its communication type to the network device during the access transmission process with the network device. This enables the network device to promptly recognize the communication type of the accessed A-IoT device, and subsequently communicate with the A-IoT device through the corresponding communication type, thereby enhancing the efficiency and accuracy of A-IoT communication between the A-IoT device and the network device.

Based on the solutions shown in FIGS. 6 to 9 above, please refer to FIG. 10, which illustrates a flowchart of an uplink transmission method according to some embodiments of the present disclosure. This method is performed interactively by an A-IoT device and a network device. The aforementioned A-IoT device may be the A-IoT device 130 in the network architecture shown in FIG. 1, and the aforementioned network device may be the network device 110 in the network architecture shown in FIG. 1. This method may include the following steps.

Step 1001, the A-IoT device performs access transmission with the network device through the uplink resource corresponding to the communication type of the A-IoT device; correspondingly, the network device receives the access transmission performed by the A-IoT device through the uplink resource corresponding to the communication type of the A-IoT device; wherein the uplink resources corresponding to different communication types do not overlap.

In some embodiments, performing, by the A-IoT device, the access transmission with the network device through the uplink resource corresponding to the communication type of the A-IoT device includes: performing, by the A-IoT device, the access transmission with the network device through the uplink resource corresponding to the communication type of the A-IoT device upon receiving an access triggering message.

Correspondingly, receiving, by the network device, the access transmission performed by the A-IoT device through the uplink resource corresponding to the communication type of the A-IoT device includes: receiving, by the network device, the access transmission performed, upon receiving an access triggering message, by the A-IoT device through the uplink resource corresponding to the communication type of the A-IoT device.

In the aforementioned embodiments of the present disclosure, the A-IoT device may initiate random access to the network device under the triggering of the access triggering message, thereby ensuring the flexibility and controllability of the random access initiated by the A-IoT device, and further improving the accuracy and efficiency of the random access initiated by the A-IoT device.

The aforementioned access triggering message may also be a message transmitted to the A-IoT device by other devices besides the network device. For instance, in an IoT system, besides the A-IoT device and the network device, there is also the control device/management device. The control device/management device may periodically/aperiodically transmit the access triggering message to the surrounding A-IoT device through IoT communication, triggering the A-IoT device to initiate random access to the network device, thereby facilitating communication between the A-IoT device and the network device.

Alternatively, the aforementioned access triggering message may also be a message generated internally by the A-IoT device. For instance, the A-IoT device internally runs an access triggering logic. For example, the A-IoT device maintains a timer, and the timer starts when the A-IoT device disconnects from the network device and resets when the A-IoT device initiates the random access to the network device. When the timer reaches its set duration, the A-IoT device internally generates the aforementioned access triggering message to trigger the A-IoT device to initiate the random access to the network device. For example, the A-IoT device detects the data volume of the data to be uploaded in its internal cache, and when this data volume reaches a preset data volume threshold, the A-IoT device internally generates the aforementioned access triggering message to trigger the A-IoT device to initiate the random access to the network device.

Alternatively, the aforementioned access triggering message may also be a message transmitted by the network device to the A-IoT device. For instance, when the network device needs to discover the surrounding A-IoT device or needs to communicate with the surrounding A-IoT device, the network device transmits the access triggering message to the surrounding A-IoT device.

In some embodiments, the access triggering message includes one or more of the following messages: a paging message, a query message, a polling message, or an inventory request message.

In the aforementioned embodiments of the present disclosure, when the access triggering message is a message transmitted by the network device to the A-IoT device, the access triggering message may be one or more of a paging message, a query message, a polling message, or an inventory request message.

In the aforementioned embodiments of the present disclosure, after the network device initiates the paging message, the query message, the polling message, and/or the inventory request message, the A-IoT device may initiate the uplink access transmission to the network device through the uplink resource corresponding to the own communication type of the A-IoT device. This enables different communication types of A-IoT devices to use non-overlapping uplink resources for access transmission when the network device triggers various types of A-IoT devices to initiate random access, thereby avoiding transmission interference when a large number of A-IoT devices perform uplink access transmission.

In some embodiments, when the communication type is the backscattering communication type, the uplink resource corresponding to the communication type includes a first uplink resource; or when the communication type is the active transmission communication type, the uplink resource corresponding to the communication type includes a second uplink resource. The first uplink resource and the second uplink resource do not overlap.

In the embodiments of the present disclosure, for the A-IoT device of the backscattering communication type and the A-IoT device of the active transmission communication type, these two types of A-IoT devices each perform uplink access transmission through non-overlapping uplink resources, so that when the A-IoT device of the backscattering communication type and the A-IoT device of the active transmission communication type use non-overlapping uplink resources when performing access transmission. This enables to control of the uplink access processes of the A-IoT device of the backscattering communication type and the A-IoT device of the active transmission communication type on non-overlapping uplink resources, thereby avoiding transmission interference as much as possible when a large number of A-IoT devices perform uplink access transmission in the system where both the A-IoT device of the backscattering communication type and the A-IoT device of the active transmission communication type need to access the network.

In some embodiments, the first uplink resource includes a first uplink frequency-domain resource, and the second uplink resource includes a second uplink frequency-domain resource; and the first uplink frequency-domain resource and the second uplink frequency-domain resource do not overlap.

In the embodiments of the present disclosure described above, when the A-IoT devices of the backscattering communication type and the active transmission communication type perform access transmission, they may use non-overlapping uplink resources in the frequency domain for random access, thereby controlling the access transmission of A-IoT devices of different communication types in the frequency domain. That is to say, the uplink access processes of A-IoT devices of the backscattering communication type and the active transmission communication type may be controlled on non-overlapping uplink frequency-domain resources, so as to avoid transmission interference in the frequency domain as much as possible when a large number of A-IoT devices perform uplink access transmission in the system where both the A-IoT devices of the backscattering communication type and the active transmission communication type need to access the network.

In some embodiments, when the first uplink frequency-domain resource and the second uplink frequency-domain resource do not overlap, other types of resources in the first uplink resource and the second uplink resource may or may not overlap; for example, the time-domain resource in the first uplink resource and the time-domain resource in the second uplink resource may or may not overlap; another example is that the code-domain resource in the first uplink resource and the code-domain resource in the second uplink resource may or may not overlap.

In some embodiments, the first uplink frequency-domain resource includes one or more frequency-domain resources; and the second uplink frequency-domain resource includes one or more frequency-domain resources.

The first uplink frequency-domain resource used by a certain A-IoT device of the backscattering communication type for access transmission may include a frequency-domain resource A; the second uplink frequency-domain resource used by a certain A-IoT device of the active transmission communication type for access transmission may include another frequency-domain resource B; the frequency-domain resource A and the frequency-domain resource B do not overlap; the frequency-domain resources in the uplink frequency-domain resources used by different A-IoT devices of the backscattering communication type for access transmission may be different or the same; and the frequency-domain resources in the uplink frequency-domain resources used by different A-IoT devices of the active transmission communication type for access transmission may be different or the same.

Alternatively, the first uplink frequency-domain resource used by an A-IoT device of the backscattering communication type for access transmission may include one frequency-domain resource A; the second uplink frequency-domain resource used by an A-IoT device of the active transmission communication type for access transmission may include a plurality of frequency-domain resources B; and the frequency-domain resource A and any of the plurality of frequency-domain resources B do not overlap.

Alternatively, the first uplink frequency-domain resource used by a certain A-IoT device of the backscattering communication type for access transmission may include a plurality of frequency-domain resources A; the second uplink frequency-domain resource used by a certain A-IoT device of the active transmission communication type for access transmission may include a plurality of frequency-domain resources B; and any one of the frequency-domain resources A and any one of the frequency-domain resources B do not overlap.

Alternatively, the first uplink frequency-domain resource used by a certain A-IoT device of the backscattering communication type for access transmission may include a plurality of frequency-domain resources A; the second uplink frequency-domain resource used by a certain A-IoT device of the active transmission communication type for access transmission may include one frequency-domain resource B; and any one of the frequency-domain resources A and the frequency-domain resource B do not overlap.

In the aforementioned embodiments of the present disclosure, the A-IoT device may utilize one frequency-domain resource for uplink transmission, simplifying the complexity of configuring/selecting the frequency-domain resource for uplink access transmission performed by the A-IoT device and enhancing the efficiency of such transmission. Alternatively, the A-IoT device may utilize a plurality of frequency-domain resources for uplink transmission, thereby improving the flexibility of the frequency-domain resources used for uplink access transmission performed by the A-IoT device and further reducing transmission interference in the frequency domain during uplink access transmission performed by the A-IoT device.

In some embodiments, when the communication type of the A-IoT device is the backscattering communication type, and the first uplink frequency-domain resource includes a plurality of frequency-domain resources, performing the access transmission with the network device through the uplink resource corresponding to the communication type of the A-IoT device includes: selecting a frequency-domain resource from the plurality of frequency-domain resources in the first uplink frequency-domain resource according to a first frequency-domain resource selection method to initiate a random access to the network device; or when the communication type of the A-IoT device is the active transmission communication type, and the second uplink frequency-domain resource includes a plurality of frequency-domain resources, performing the access transmission with the network device through the uplink resource corresponding to the communication type of the A-IoT device includes: selecting a frequency-domain resource from the plurality of frequency-domain resources in the second uplink frequency-domain resource according to a second frequency-domain resource selection method to initiate a random access to the network device.

That is to say, when the communication type of the A-IoT device is the backscattering communication type, and the first uplink frequency-domain resource includes a plurality of frequency-domain resources, the frequency-domain resource for the A-IoT device to initiate random access transmission is selected from the plurality of frequency-domain resources in the first uplink frequency-domain resource according to the first frequency-domain resource selection method; or when the communication type of the A-IoT device is the active transmission communication type, and the second uplink frequency-domain resource includes a plurality of frequency-domain resources, the frequency-domain resource for the A-IoT device to initiate random access transmission is selected from the plurality of frequency-domain resources in the second uplink frequency-domain resource according to the second frequency-domain resource selection method.

In the embodiments of the present disclosure, for the A-IoT device of the backscattering communication type, when the first uplink frequency-domain resource of the A-IoT device includes a plurality of frequency-domain resources, the A-IoT device may select one frequency-domain resource for uplink access transmission through a predetermined frequency-domain resource selection method. Correspondingly, for the A-IoT device of the active transmission communication type, when the second uplink frequency-domain resource of the A-IoT device includes a plurality of frequency-domain resources, the A-IoT device may select one frequency-domain resource for uplink access transmission through a predetermined frequency-domain resource selection method. The above solution improves the flexibility of the frequency-domain resources used by the A-IoT device for uplink access transmission, further reducing transmission interference in the frequency domain during uplink access transmission by the A-IoT device.

The first frequency-domain resource selection method and the second frequency-domain resource selection method may be the same or different.

In some embodiments, the first frequency-domain resource selection method includes one or more of the following methods: randomly selecting the frequency-domain resource, selecting the frequency-domain resource based on the identifier information of the A-IoT device, or selecting the frequency-domain resource based on the weight of the frequency-domain resource; and the second frequency-domain resource selection method includes one or more of the following methods: randomly selecting the frequency-domain resource, selecting the frequency-domain resource based on the identifier information of the A-IoT device, or selecting the frequency-domain resource based on the weight of the frequency-domain resource.

For the A-IoT device of the backscattering communication type, when the first uplink frequency-domain resource of the A-IoT device includes a plurality of frequency-domain resources, the A-IoT device may randomly select one of the frequency-domain resources for uplink access transmission.

Alternatively, the A-IoT device may also use the identifier information of the A-IoT device to select a frequency-domain resource for uplink access transmission through a pre-set algorithm. For example, the device identifier (ID) or another device identifier of the A-IoT device is used to perform a modulo operation on the number of the plurality of frequency-domain resources in the first uplink frequency-domain resource, and the frequency-domain resource with the corresponding serial number is selected for uplink access transmission based on the modulo result.

Alternatively, the plurality of frequency-domain resources in the first uplink frequency-domain resource may have their own weights. The A-IoT device may combine the respective weights of the plurality of frequency-domain resources to randomly select one frequency-domain resource from the plurality of frequency-domain resources in the first uplink frequency-domain resource for uplink access transmission. For example, the higher the weight of the frequency-domain resource, the higher the probability of being randomly selected. Conversely, the lower the weight of the frequency-domain resource, the lower the probability of being randomly selected. For instance, assuming that the first uplink frequency-domain resource includes frequency-domain resource 1, frequency-domain resource 2, and frequency-domain resource 3, wherein the weight of frequency-domain resource 1 is 0.5, the weight of frequency-domain resource 2 is 0.3, and the weight of frequency-domain resource 3 is 0.2, when the A-IoT device selects a frequency-domain resource from frequency-domain resource 1, frequency-domain resource 2, and frequency-domain resource 3, there is a 50% probability that frequency-domain resource 1 is selected, a 30% probability that frequency-domain resource 2 is selected, and a 20% probability that frequency-domain resource 3 is selected.

Similarly, for the A-IoT device of the active transmission communication type, when the second uplink frequency-domain resource of the A-IoT device includes a plurality of frequency-domain resources, the A-IoT device may randomly select one of the frequency-domain resources for uplink access transmission.

Alternatively, the A-IoT device may also use the identifier information of the A-IoT device to select a frequency-domain resource for uplink access transmission through a pre-set algorithm. For example, the device ID or another device identifier of the A-IoT device is used to perform a modulo operation on the number of the plurality of frequency-domain resources in the second uplink frequency-domain resource, and the frequency-domain resource with the corresponding serial number is selected for uplink access transmission based on the modulo result.

Alternatively, the plurality of frequency-domain resources in the second uplink frequency-domain resource may have their own weights. The A-IoT device may combine the weights of the plurality of frequency-domain resources to randomly select one frequency-domain resource from the plurality of frequency-domain resources in the second uplink frequency-domain resource for uplink access transmission. For example, the higher the weight of the frequency-domain resource, the higher the probability of being randomly selected. Conversely, the lower the weight of the frequency-domain resource, the lower the probability of being randomly selected.

In the solution in the aforementioned embodiments of the present disclosure, when the uplink frequency-domain resource used by the A-IoT device for access transmission includes a plurality of frequency-domain resources, the A-IoT device may select one frequency-domain resource from the plurality of ones for uplink access transmission through methods such as random selection, random selection combined with weights, or calculation combined with identifier information. Even in the scenario where a plurality of A-IoT devices of the same communication type are configured with the same uplink frequency-domain resource, these A-IoT devices have the opportunity to select different frequency-domain resources for uplink access transmission, thereby enhancing the flexibility of the frequency-domain resources used by the A-IoT devices for uplink access transmission and further reducing transmission interference in the frequency domain during uplink access transmission performed by the A-IoT devices.

In some embodiments, when the communication type of the A-IoT device is the backscattering communication type, the first uplink frequency-domain resource is configured to the A-IoT device by the network device through at least one of the following methods: a system message, or an access triggering message; or when the communication type of the A-IoT device is the active transmission communication type, the second uplink frequency-domain resource is configured to the A-IoT device by the network device through at least one of the following methods: a system message, or an access triggering message.

In embodiments of the present disclosure, the network device may pre-configure the uplink frequency-domain resource used by the A-IoT device for access transmission through the system message and the access triggering message.

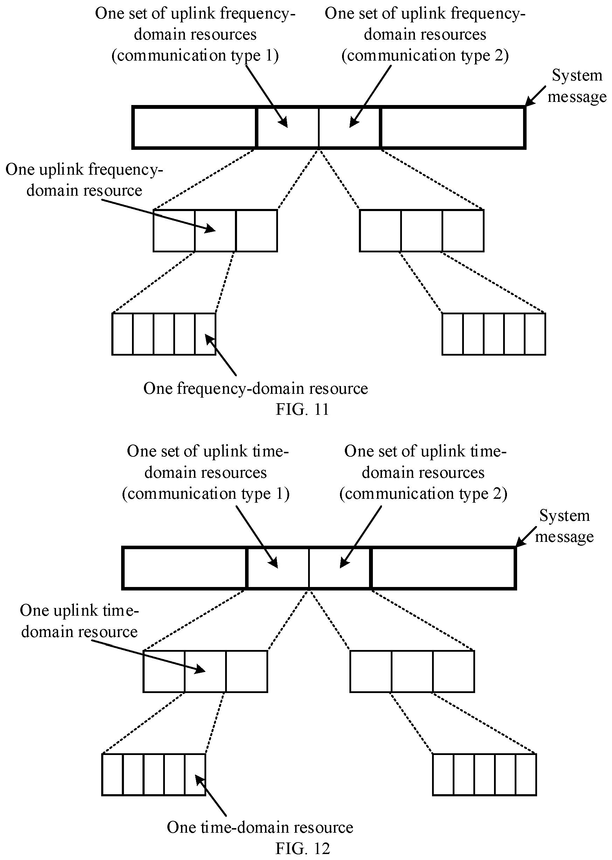

For example, for a certain A-IoT device, the network device configures the uplink frequency-domain resource used for access transmission to the A-IoT device through a system message (such as a system broadcast message or a system message block). For instance, the network device carries a set of uplink frequency-domain resources corresponding to various communication types in the system message. Please refer to FIG. 11, which illustrates a schematic diagram of resource configuration for a system message involved in embodiments of the present disclosure. As shown in FIG. 11, in the aforementioned system message, each communication type corresponds to a set of uplink frequency-domain resources, each set of uplink frequency-domain resources includes a plurality of uplink frequency-domain resources, and each uplink frequency-domain resource corresponds to the aforementioned first uplink frequency-domain resource or second uplink frequency-domain resource. That is to say, each uplink frequency-domain resource includes one or more frequency-domain resources, and the system message also indicates the range of device IDs corresponding to each uplink frequency-domain resource. After receiving the system message, the A-IoT device determines the plurality of corresponding uplink frequency-domain resources according to its own communication type, and selects one of the plurality of uplink frequency-domain resources based on its own device ID as the uplink frequency-domain resource used for its subsequent uplink access transmission.

For another example, for a certain A-IoT device, the network device configures the uplink frequency-domain resource used for access transmission to the A-IoT device through an access triggering message. For instance, when the network device transmits an access triggering message (such as the aforementioned paging message, query message, polling message, or inventory request message) to the A-IoT device, the network device carries/indicates the uplink frequency-domain resource used for uplink access transmission performed by the A-IoT device through the access triggering message. For example, the access triggering message directly includes or indirectly indicates the range of uplink frequency-domain resources used for uplink access transmission performed by the A-IoT device.

For another example, for a certain A-IoT device, the network device configures the uplink frequency-domain resource used for access transmission to the A-IoT device through a system message and an access triggering message. For instance, the network device carries a plurality of uplink frequency-domain resources corresponding to various communication types in the system message. After receiving the system message, the A-IoT device determines the plurality of corresponding uplink frequency-domain resources based on its own communication type; subsequently, when the network device transmits an access triggering message to the A-IoT device, the network device carries/indicates one uplink frequency-domain resource used by the A-IoT device for uplink access transmission through the access triggering message. For example, the access triggering message directly includes or indirectly indicates the serial number of the uplink frequency-domain resource, in the plurality of uplink frequency-domain resources corresponding to the communication type of the A-IoT device, used by the A-IoT device for uplink access transmission.

For A-IoT devices of different communication types, the network device may configure the uplink frequency-domain resources using the same configuration method or different configuration methods.

In the solution in the aforementioned embodiments of the present disclosure, the network device may configure the uplink frequency-domain resource used by the A-IoT device for access transmission to the A-IoT device through the system message and/or the access triggering message, ensuring the controllability of the configuration of the uplink frequency-domain resource used by each A-IoT device for access transmission, thereby ensuring the efficiency and accuracy of the access transmission performed by the A-IoT device.

In some embodiments, the aforementioned frequency-domain resource is a carrier wave.

In the aforementioned embodiments of the present disclosure, A-IoT devices of different communication types may initiate random access to the network device on non-overlapping carrier waves, thereby minimizing transmission interference in the frequency domain when a large number of A-IoT devices perform random access.

In other embodiments, the aforementioned frequency-domain resource may also be a frequency range, a frequency point, or the like.

In some embodiments, the first uplink resource includes a first uplink time-domain resource, and the second uplink resource includes a second uplink time-domain resource; and the first uplink time-domain resource and the second uplink time-domain resource do not overlap.

In the embodiments described above in the present disclosure, when A-IoT devices of the backscattering communication type and the active transmission communication type perform access transmission, they may use non-overlapping uplink resources in the time domain for random access, thereby controlling the access transmission of A-IoT devices of different communication types in the time domain. That is to say, the uplink access processes of A-IoT devices of the backscattering communication type and the active transmission communication type may be controlled on non-overlapping uplink time-domain resources, so as to avoid transmission interference in the time domain as much as possible when a large number of A-IoT devices perform uplink access transmission in the system where both the A-IoT devices of the backscattering communication type and the active transmission communication type need to access the network.

In some embodiments, when the first uplink time-domain resource and the second uplink time-domain resource do not overlap, other types of resources in the first uplink resource and the second uplink resource may or may not overlap; for example, the frequency-domain resource in the first uplink resource and the frequency-domain resource in the second uplink resource may or may not overlap; another example is that the code-domain resource in the first uplink resource and the code-domain resource in the second uplink resource may or may not overlap.

In some embodiments, the first uplink time-domain resource includes one or more time-domain resources; and the second uplink time-domain resource includes one or more time-domain resources.

The first uplink time-domain resource used by a certain A-IoT device of the backscattering communication type for access transmission may include a time-domain resource A; the second uplink time-domain resource used by a certain A-IoT device of the active transmission communication type for access transmission may include another time-domain resource B; the time-domain resource A and the time-domain resource B do not overlap; the time-domain resources in the uplink time-domain resources used by different A-IoT devices of the backscattering communication type for access transmission may be different or the same; and the time-domain resources in the uplink time-domain resources used by different A-IoT devices of the active transmission communication type for access transmission may be different or the same.

Alternatively, the first uplink time-domain resource used by a certain A-IoT device of the backscattering communication type for access transmission may include one time-domain resource A; the second uplink time-domain resource used by a certain A-IoT device of the active transmission communication type for access transmission may include a plurality of time-domain resources B; and time-domain resource A and any of the plurality of time-domain resources B do not overlap.

Alternatively, the first uplink time-domain resource used by a certain A-IoT device of the backscattering communication type for access transmission may include a plurality of time-domain resources A; the second uplink time-domain resource used by a certain A-IoT device of the active transmission communication type for access transmission may include a plurality of time-domain resources B; and any one time-domain resource A and any one time-domain resource B do not overlap.

Alternatively, the first uplink time-domain resource used by a certain A-IoT device of the backscattering communication type for access transmission may include a plurality of time-domain resources A; the second uplink time-domain resource used by a certain A-IoT device of the active transmission communication type for access transmission may include one time-domain resource B; and any one of the time-domain resources A and the time-domain resource B do not overlap.

In the aforementioned embodiments of the present disclosure, the A-IoT device may utilize one time-domain resource for uplink transmission, simplifying the complexity of configuring/selecting the time-domain resource for uplink access transmission performed by the A-IoT device and enhancing the efficiency of such transmission. Alternatively, the A-IoT device may utilize a plurality of time-domain resources for uplink transmission, thereby improving the flexibility of the time-domain resources used for uplink access transmission performed by the A-IoT device and further reducing transmission interference in the time domain during uplink access transmission performed by the A-IoT device.

In some embodiments, when the communication type of the A-IoT device is the backscattering communication type, and the first uplink time-domain resource includes a plurality of time-domain resources, performing the access transmission with the network device through the uplink resource corresponding to the communication type of the A-IoT device includes: selecting one time-domain resource from the plurality of time-domain resources in the first uplink time-domain resource according to a first time-domain resource selection method to initiate a random access to the network device; or when the communication type of the A-IoT device is the active transmission communication type, and the second uplink time-domain resource includes a plurality of time-domain resources, performing the access transmission with the network device through the uplink resource corresponding to the communication type of the A-IoT device includes: selecting one time-domain resource from the plurality of time-domain resources in the second uplink time-domain resource according to a second time-domain resource selection method to initiate a random access to the network device.

That is to say, when the communication type of the A-IoT device is the backscattering communication type, and the first uplink time-domain resource includes a plurality of time-domain resources, the time-domain resource for the A-IoT device to initiate random access transmission is a time-domain resource selected from the plurality of time-domain resources in the first uplink time-domain resource according to the first time-domain resource selection method; or when the communication type of the A-IoT device is the active transmission communication type, and the second uplink time-domain resource includes a plurality of time-domain resources, the time-domain resource for the A-IoT device to initiate random access transmission is a time-domain resource selected from the plurality of time-domain resources in the second uplink time-domain resource according to the second time-domain resource selection method.

In the embodiments described above in the present disclosure, for the A-IoT device of the backscattering communication type, when the first uplink time-domain resource of the A-IoT device includes a plurality of time-domain resources, the A-IoT device may select one time-domain resource from them for uplink access transmission through a predetermined time-domain resource selection method. Correspondingly, for the A-IoT device of the active transmission communication type, when the second uplink time-domain resource of the A-IoT device includes a plurality of time-domain resources, the A-IoT device may select one time-domain resource from them for uplink access transmission through a predetermined time-domain resource selection method. The above solution improves the flexibility of the time-domain resources used by the A-IoT device for uplink access transmission, further reducing transmission interference in the time domain during uplink access transmission by the A-IoT device.

The first time-domain resource selection method and the second time-domain resource selection method may be the same or different.

In some embodiments, the first time-domain resource selection method includes one or more of the following methods: randomly selecting the time-domain resource, selecting the time-domain resource based on the identifier information of the A-IoT device, or selecting the time-domain resource based on the weight of the time-domain resource; and the second time-domain resource selection method includes one or more of the following methods: randomly selecting the time-domain resource, selecting the time-domain resource based on the identifier information of the A-IoT device, or selecting the time-domain resource based on the weight of the time-domain resource.

For the A-IoT device of the backscattering communication type, when the first uplink time-domain resource of the A-IoT device includes a plurality of time-domain resources, the A-IoT device may randomly select one of the time-domain resources for uplink access transmission.

Alternatively, the A-IoT device may also use the identifier information of the A-IoT device to select a time-domain resource for uplink access transmission through a pre-set algorithm. For example, the device ID or another device identifier of the A-IoT device is used to perform a modulo operation on the number of plurality of time-domain resources in the first uplink time-domain resource, and the time-domain resource with the corresponding serial number is selected for uplink access transmission based on the modulo result.

Alternatively, the plurality of time-domain resources in the first uplink time-domain resource may have their own weights. The A-IoT device may also combine the respective weights of the plurality of time-domain resources to randomly select one time-domain resource from the plurality of time-domain resources in the first uplink time-domain resource for uplink access transmission. For example, the higher the weight of the time-domain resource, the higher the probability of being randomly selected. Conversely, the lower the weight of the time-domain resource, the lower the probability of being randomly selected. For instance, assuming that the first uplink time-domain resource includes time-domain resource 1, time-domain resource 2, and time-domain resource 3, wherein time-domain resource 1 has a weight of 0.5, time-domain resource 2 has a weight of 0.3, and time-domain resource 3 has a weight of 0.2, when the A-IoT device selects a time-domain resource from time-domain resource 1, time-domain resource 2, and time-domain resource 3, there is a 50% probability that time-domain resource 1 is selected, a 30% probability that time-domain resource 2 is selected, and a 20% probability that time-domain resource 3 is selected.

Similarly, for the A-IoT device of the active transmission communication type, when the second uplink time-domain resource of the A-IoT device includes a plurality of time-domain resources, the A-IoT device may randomly select one of the time-domain resources for uplink access transmission.

Alternatively, the A-IoT device may also use the identifier information of the A-IoT device to select a time-domain resource for uplink access transmission through a pre-set algorithm. For example, the device ID or another device identifier of the A-IoT device is used to perform a modulo operation on the number of the plurality of time-domain resources in the second uplink time-domain resource, and the time-domain resource with the corresponding serial number is selected for uplink access transmission based on the modulo result.

Alternatively, the plurality of time-domain resources in the second uplink time-domain resource may have their own weights. The A-IoT device may combine the weights of the plurality of time-domain resources to randomly select one from the plurality of time-domain resources in the second uplink time-domain resource for uplink access transmission. For example, the higher the weight of the time-domain resource, the higher the probability of being randomly selected. Conversely, the lower the weight of the time-domain resource, the lower the probability of being randomly selected.

In the solution in the aforementioned embodiments of the present disclosure, when the uplink time-domain resource used by the A-IoT device for access transmission includes a plurality of time-domain resources, the A-IoT device may select one time-domain resource from the plurality of time-domain resources for uplink access transmission through methods such as random selection, random selection combined with weights, or calculation combined with identifier information. Even in scenarios where a plurality of A-IoT devices of the same communication type are configured with the same uplink time-domain resource, these devices have the opportunity to select different time-domain resources for uplink access transmission, thereby enhancing the flexibility of the time-domain resources used by the A-IoT devices for uplink access transmission and further reducing transmission interference in the time domain during uplink access transmission performed by the A-IoT devices.

In some embodiments, when the communication type of the A-IoT device is the backscattering communication type, the first uplink time-domain resource is configured to the A-IoT device by the network device through at least one of the following methods: a system message, or an access triggering message; or when the communication type of the A-IoT device is the active transmission communication type, the second uplink time-domain resource is configured to the A-IoT device by the network device through at least one of the following methods: a system message, or an access triggering message.

In embodiments of the present disclosure, the network device may pre-configure the uplink time-domain resource used by the A-IoT device for access transmission through the system message and the access triggering message.

For example, for a certain A-IoT device, the network device configures the uplink time-domain resource used for access transmission to the A-IoT device through a system message (such as a system broadcast message or a system message block). For instance, the network device carries a set of uplink time-domain resources corresponding to various communication types in the system message. Please refer to FIG. 12, which illustrates a schematic diagram of resource configuration of a system message involved in embodiments of the present disclosure. As shown in FIG. 12, in the above system message, each communication type corresponds to a set of uplink time-domain resources, each set of uplink time-domain resources includes a plurality of uplink time-domain resources, and each uplink time-domain resource corresponds to the aforementioned first uplink time-domain resource or second uplink time-domain resource. That is to say, each uplink time-domain resource includes one or more time-domain resources, and the system message also indicates the range of device IDs corresponding to each uplink time-domain resource. After receiving the system message, the A-IoT device determines the plurality of corresponding uplink time-domain resources according to its own communication type, and selects one of the plurality of uplink time-domain resources according to its own device ID as the uplink time-domain resource used for subsequent uplink access transmission.

For another example, for a certain A-IoT device, the network device configures the uplink time-domain resource used for access transmission to the A-IoT device through an access triggering message. For instance, when the network device transmits an access triggering message (such as the aforementioned paging message, query message, polling message, or inventory request message) to the A-IoT device, the network device carries/indicates the uplink time-domain resource used for uplink access transmission performed by the A-IoT device through the access triggering message. For example, the access triggering message directly includes or indirectly indicates the range of uplink time-domain resources used for uplink access transmission performed by the A-IoT device.

For another example, for a certain A-IoT device, the network device configures the uplink time-domain resource used for access transmission to the A-IoT device through a system message and an access triggering message. For instance, the network device carries a plurality of uplink time-domain resources corresponding to various communication types in the system message. After receiving the system message, the A-IoT device determines the plurality of corresponding uplink time-domain resources based on its own communication type; subsequently, when the network device transmits an access triggering message to the A-IoT device, the network device carries/indicates one uplink time-domain resource used by the A-IoT device for uplink access transmission through the access triggering message. For example, the access triggering message directly includes or indirectly indicates the serial number of the uplink time-domain resource, in the plurality of uplink time-domain resources corresponding to the communication type of the A-IoT device, used by the A-IoT device for uplink access transmission.

For A-IoT devices of different communication types, the network device may configure uplink time-domain resources using the same configuration method or different configuration methods.

In the solution in the aforementioned embodiments of the present disclosure, the network device may configure the uplink time-domain resource used by the A-IoT device for access transmission to the A-IoT device through the system message and/or the access triggering message, ensuring the controllability of the configuration of uplink time-domain resource used by each A-IoT device for access transmission, thereby ensuring the efficiency and accuracy of the access transmission performed by the A-IoT device.

In some embodiments, the time-domain resource is the transmission opportunity.

In the aforementioned embodiments of the present disclosure, A-IoT devices of different communication types may initiate random access to the network device at non-overlapping transmission opportunities, thereby minimizing transmission interference in the time domain when a large number of A-IoT devices perform random access.

In some embodiments, the first uplink resource includes a first uplink code-domain resource, and the second uplink resource includes a second uplink code-domain resource; and the first uplink code-domain resource and the second uplink code-domain resource do not overlap.

In the embodiments of the present disclosure described above, when A-IoT devices of the backscattering communication type and the active transmission communication type perform access transmission, they may use non-overlapping uplink resources in the code domain for random access, thereby controlling the access transmission of A-IoT devices of different communication types in the code domain. That is to say, the uplink access processes of A-IoT devices of the backscattering communication type and the active transmission communication type may be controlled on non-overlapping uplink code-domain resources, so as to minimize transmission interference in the code domain when a large number of A-IoT devices perform uplink access transmission in the system where both the A-IoT devices of the backscattering communication type and the active transmission communication type need to access the network.

In some embodiments, when the first uplink code-domain resource and the second uplink code-domain resource do not overlap, other types of resources in the first uplink resource and the second uplink resource may or may not overlap; for example, the time-domain resource in the first uplink resource and the time-domain resource in the second uplink resource may or may not overlap; another example is that the frequency-domain resource in the first uplink resource and the frequency-domain resource in the second uplink resource may or may not overlap.

In some embodiments, the first uplink code-domain resource includes one or more code-domain resources; and the second uplink code-domain resource includes one or more code-domain resources.

The first uplink code-domain resource used by a certain A-IoT device of the backscattering communication type for access transmission may include a code-domain resource A; the second uplink code-domain resource used by a certain A-IoT device of the active transmission communication type for access transmission may include another code-domain resource B; the code-domain resource A and the code-domain resource B do not overlap; the code-domain resources in the uplink code-domain resources used by different A-IoT devices of the backscattering communication type for access transmission may be different or the same; and the code-domain resources in the uplink code-domain resources used by different A-IoT devices of the active transmission communication type for access transmission may be different or the same.

Alternatively, the first uplink code-domain resource used by a certain A-IoT device of the backscattering communication type for access transmission may include one code-domain resource A; the second uplink code-domain resource used by a certain A-IoT device of the active transmission communication type for access transmission may include a plurality of code-domain resources B; and code-domain resource A and any of the plurality of code-domain resources B do not overlap.

Alternatively, the first uplink code-domain resource used by a certain A-IoT device of the backscattering communication type for access transmission may include a plurality of code-domain resources A; the second uplink code-domain resource used by a certain A-IoT device of the active transmission communication type for access transmission may include a plurality of code-domain resources B; and any one code-domain resource A and any one code-domain resource B do not overlap.

Alternatively, the first uplink code-domain resource used by an A-IoT device of the backscattering communication type for access transmission may include a plurality of code-domain resources A; the second uplink code-domain resource used by an A-IoT device of the active transmission communication type for access transmission may include one code-domain resource B; and any code-domain resource A and the code-domain resource B do not overlap.

In the aforementioned embodiments of the present disclosure, the A-IoT device may utilize one code-domain resource for uplink transmission, simplifying the complexity of configuring/selecting the code-domain resource for uplink access transmission performed by the A-IoT device and enhancing the efficiency of such transmission. Alternatively, the A-IoT device may utilize a plurality of code-domain resources for uplink transmission, thereby improving the flexibility of the code-domain resources used for uplink access transmission performed by the A-IoT device and further reducing transmission interference in the code domain during uplink access transmission performed by the A-IoT device.

In some embodiments, when the communication type of the A-IoT device is the backscattering communication type, and the first uplink code-domain resource includes a plurality of code-domain resources, performing the access transmission with the network device through the uplink resource corresponding to the communication type of the A-IoT device includes: selecting one code-domain resource from the plurality of code-domain resources in the first uplink code-domain resource according to a first code-domain resource selection method to initiate a random access to the network device; or when the communication type of the A-IoT device is the active transmission communication type, and the second uplink code-domain resource includes a plurality of code-domain resources, performing the access transmission with the network device through the uplink resource corresponding to the communication type of the A-IoT device includes: selecting one code-domain resource from the plurality of code-domain resources in the second uplink code-domain resource according to a second code-domain resource selection method to initiate a random access to the network device.

That is to say, when the communication type of the A-IoT device is the backscattering communication type, and the first uplink code-domain resource includes a plurality of code-domain resources, the code-domain resource for the A-IoT device to initiate random access transmission is selected from the plurality of code-domain resources in the first uplink code-domain resource according to the first code-domain resource selection method; or when the communication type of the A-IoT device is the active transmission communication type, and the second uplink code-domain resource includes a plurality of code-domain resources, the code-domain resource for the A-IoT device to initiate random access transmission is selected from the plurality of code-domain resources in the second uplink code-domain resource according to the second code-domain resource selection method.

In the aforementioned embodiments of the present disclosure, for the A-IoT device of the backscattering communication type, when the first uplink code-domain resource of the A-IoT device includes a plurality of code-domain resources, the A-IoT device may select one code-domain resource from them for uplink access transmission through a predetermined code-domain resource selection method. Correspondingly, for the A-IoT device of the active transmission communication type, when the second uplink code-domain resource of the A-IoT device includes a plurality of code-domain resources, the A-IoT device may select one code-domain resource from them for uplink access transmission through a predetermined code-domain resource selection method. The aforementioned solution enhances the flexibility of the code-domain resources used by the A-IoT device for uplink access transmission, further reducing transmission interference in the code domain during uplink access transmission by the A-IoT device.

The first code-domain resource selection method and the second code-domain resource selection method may be the same or different.

In some embodiments, the first code-domain resource selection method includes one or more of the following methods: randomly selecting the code-domain resource, selecting the code-domain resource based on the identifier information of the A-IoT device, or selecting the code-domain resource based on the weight of the code-domain resource; and the second code-domain resource selection method includes one or more of the following methods: randomly selecting the code-domain resource, selecting the code-domain resource based on the identifier information of the A-IoT device, or selecting the code-domain resource based on the weight of the code-domain resource.

For the A-IoT device of the backscattering communication type, when the first uplink code-domain resource of the A-IoT device includes a plurality of code-domain resources, the A-IoT device may randomly select one of the code-domain resources for uplink access transmission.

Alternatively, the A-IoT device may also use the identifier information of the A-IoT device to select a code-domain resource for uplink access transmission through a pre-set algorithm. For example, the device ID or another device identifier of the A-IoT device is used to perform a modulo operation on the number of the plurality of code-domain resources in the first uplink code-domain resource, and the code-domain resource with the corresponding serial number is selected for uplink access transmission based on the modulo result.

Alternatively, the plurality of code-domain resources in the first uplink code-domain resource may have their own weights. The A-IoT device may also combine the respective weights of the plurality of code-domain resources to randomly select one code-domain resource from the plurality of code-domain resources in the first uplink code-domain resource for uplink access transmission. For example, the higher the weight of the code-domain resource, the higher the probability of being randomly selected. Conversely, the lower the weight of the code-domain resource, the lower the probability of being randomly selected. For instance, assuming that the first uplink code-domain resource includes code-domain resource 1, code-domain resource 2, and code-domain resource 3, wherein code-domain resource 1 has a weight of 0.5, code-domain resource 2 has a weight of 0.3, and code-domain resource 3 has a weight of 0.2, when the A-IoT device selects a code-domain resource from code-domain resource 1, code-domain resource 2, and code-domain resource 3, code-domain resource 1 has a 50% probability of being selected, code-domain resource 2 has a 30% probability of being selected, and code-domain resource 3 has a 20% probability of being selected.

Similarly, for the A-IoT device of the active transmission communication type, when the second uplink code-domain resource of the A-IoT device includes a plurality of code-domain resources, the A-IoT device may randomly select one of the code-domain resources for uplink access transmission.

Alternatively, the A-IoT device may also use the identifier information of the A-IoT device to select a code-domain resource for uplink access transmission through a pre-set algorithm. For example, the device ID or another device identifier of the A-IoT device is used to perform a modulo operation on the number of the plurality of code-domain resources in the second uplink code-domain resource, and the code-domain resource with the corresponding serial number is selected for uplink access transmission based on the modulo result.

Alternatively, the plurality of code-domain resources in the second uplink code-domain resource may have their own weights. The A-IoT device may combine the weights of the plurality of code-domain resources to randomly select one code-domain resource from the plurality of code-domain resources in the second uplink code-domain resource for uplink access transmission. For example, the higher the weight of the code-domain resource, the higher the probability of being randomly selected; correspondingly, the lower the weight of the code-domain resource, the lower the probability of being randomly selected.

In the solution in the above embodiments of the present disclosure, when the uplink code-domain resource used by the A-IoT device for access transmission includes a plurality of code-domain resources, the A-IoT device may select one code-domain resource from the plurality of code-domain resources for uplink access transmission through random selection, random selection combined with weights, or calculation combined with identifier information. Even in the case where a plurality of A-IoT devices of the same communication type are configured with the same uplink code-domain resource, these A-IoT devices have the opportunity to select different code-domain resources for uplink access transmission, thereby enhancing the flexibility of the code-domain resources used by the A-IoT devices for uplink access transmission and further reducing transmission interference in the code domain during uplink access transmission performed by the A-IoT devices.

In some embodiments, when the communication type of the A-IoT device is the backscattering communication type, the first uplink code-domain resource is configured to the A-IoT device by the network device through at least one of the following methods: a system message, or an access triggering message; or when the communication type of the A-IoT device is the active transmission communication type, the second uplink code-domain resource is configured to the A-IoT device by the network device through at least one of the following methods: a system message, or an access triggering message.

In embodiments of the present disclosure, the network device may pre-configure the uplink code-domain resources used by the A-IoT device for access transmission through the system message and the access triggering message.

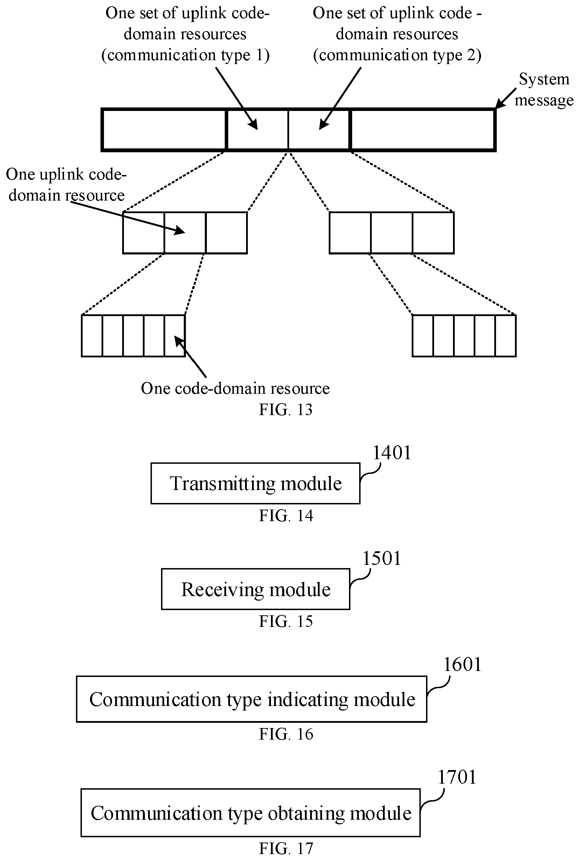

For example, for a certain A-IoT device, the network device configures the uplink code-domain resource used for access transmission to the A-IoT device through a system message (such as a system broadcast messages or a system message blocks). For instance, the network device carries a set of uplink code-domain resources corresponding to various communication types in the system message. Please refer to FIG. 13, which illustrates a schematic diagram of resource configuration for a system message involved in embodiments of the present disclosure. As shown in FIG. 13, in the aforementioned system message, each communication type corresponds to a set of uplink code-domain resources, each set of uplink code-domain resources includes a plurality of uplink code-domain resources, and each uplink code-domain resource corresponds to the aforementioned first uplink code-domain resource or second uplink code-domain resource. That is to say, each uplink code-domain resource includes one or more code-domain resources, and the system message also indicates the range of device IDs corresponding to each uplink code-domain resource. After receiving the system message, the A-IoT device determines the plurality of corresponding uplink code-domain resources based on its own communication type, and selects one of the plurality of uplink code-domain resources based on its own device ID as the uplink code-domain resource used for subsequent uplink access transmission.

For another example, for a certain A-IoT device, the network device configures the uplink code-domain resources used for access transmission to the A-IoT device through an access triggering message. For instance, when the network device transmits an access triggering message (such as the aforementioned paging message, query message, polling message, or inventory request message) to the A-IoT device, the network device carries/indicates the uplink code-domain resources used for uplink access transmission performed by the A-IoT device through the access triggering message. For example, the access triggering message directly includes or indirectly indicates the range of uplink code-domain resources used for uplink access transmission performed by the A-IoT device.

For another example, for a certain A-IoT device, the network device configures the uplink code-domain resource used for access transmission to the A-IoT device through a system message and an access triggering message. For instance, the network device carries a plurality of uplink code-domain resources corresponding to various communication types in the system message. After receiving the system message, the A-IoT device determines the plurality of corresponding uplink code-domain resources based on its own communication type. Subsequently, when the network device transmits an access triggering message to the A-IoT device, the network device carries/indicates one uplink code-domain resource used by the A-IoT device for uplink access transmission through the access triggering message. For example, the access triggering message directly includes or indirectly indicates the serial number of the uplink code-domain resource, in the plurality of uplink code-domain resources corresponding to the communication type of the A-IoT device, used by the A-IoT device for uplink access transmission.

For A-IoT devices of different communication types, the network device may configure the uplink code-domain resources using the same configuration method or different configuration methods.

In the solution in the aforementioned embodiments of the present disclosure, the network device may configure the uplink code-domain resource used by the A-IoT device for access transmission to the A-IoT device through the system message and/or the access triggering message, ensuring the controllability of the configuration of uplink code-domain resource used by each A-IoT device for access transmission, thereby ensuring the efficiency and accuracy of the access transmission performed by the A-IoT device.

In some embodiments, the code-domain resource is a random access preamble.

In the embodiments described above in the present disclosure, A-IoT devices of different communication types may initiate random access to the network device through non-overlapping random access preambles, thereby minimizing transmission interference in the code domain when a large number of A-IoT devices perform random access.

Step 1002: During the access transmission process with the network device, the A-IoT device indicates the communication type to the network device. Correspondingly, the network device obtains the communication type of the A-IoT device indicated by the A-IoT device during the access transmission process with the network device.

In the aforementioned embodiments of the present disclosure, during the random access process, the A-IoT device may indicate its communication type to the network device. Correspondingly, the network device may determine, based on its communication type, how to schedule and transmit information to the A-IoT device, thereby improving the transmission scheduling efficiency for the A-IoT device.

For example, if the communication type reported by the A-IoT device is the active transmission type, the subsequent network device (such as base station) may configure periodic uplink resources for the A-IoT device.

In some embodiments, during the access transmission process with the network device, indicating, by the A-IoT device, the communication type to the network device includes: indicating, by the A-IoT device, the communication type of the A-IoT device to the network device through a random access message during the random access process.

Correspondingly, obtaining, by the network device, the communication type of the A-IoT device indicated by the A-IoT device during the access transmission process with the network device includes: obtaining, by the network device, the communication type of the A-IoT device indicated by the A-IoT device through the random access message during the random access process.

In the aforementioned embodiments of the present disclosure, the A-IoT device may report its communication type to the network device through the random access message during the random access process, thereby promptly informing the network device of its communication type during the access process. This enables the network device to quickly perform subsequent transmission with the A-IoT device based on the communication type of the A-IoT device, thereby improving the transmission efficiency between the A-IoT device and the network device.

In some embodiments, the communication type of the A-IoT device is indicated by the information carried in the random access message; and/or, the communication type of the A-IoT device is associated with the identifier information of the logical channel for the random access message.

In the above-mentioned embodiment of the present disclosure, when the A-IoT device reports its communication type to the network device through the random access message, the communication type of the A-IoT device may be directly indicated by the information in the random access message. For example, the random access message carries communication type indication information, which directly indicates the communication type of the A-IoT device.

For example, the aforementioned communication type indication information occupies 1 bit. When the communication type indication information takes a value of 0, it indicates that the communication type of the A-IoT device is the backscattering communication type; and when the communication type indication information takes a value of 1, it indicates that the communication type of the A-IoT device is the active transmission communication type. Alternatively, when the communication type indication information takes a value of 1, it indicates that the communication type of the A-IoT device is the backscattering communication type; and when the communication type indication information takes a value of 0, it indicates that the communication type of the A-IoT device is the active transmission communication type.

In the above embodiment of the present disclosure, when the A-IoT device reports its communication type to the network device through the random access message, the communication type of the A-IoT device may also be implicitly indicated through the random access message. For example, the A-IoT device selects, according to its own communication type, a corresponding logical channel for transmitting the random access message. Correspondingly, the network device identifies the communication type of the A-IoT device based on the identifier information of the logical channel for the random access message transmitted by the A-IoT device.

For example, when the communication type of the A-IoT device is the backscattering communication type, the A-IoT device selects the logical channel with identifier information 1 to transmit the random access message. Correspondingly, the network device determines that the identifier information of the logical channel for this random access message is identifier information 1, and determines that the communication type of the A-IoT device is the backscattering communication type. Another example is when the communication type of the A-IoT device is the active transmission communication type, the A-IoT device selects the logical channel with identifier information 2 to transmit the random access message. Correspondingly, the network device determines that the identifier information of the logical channel for this random access message is identifier information 2, and determines that the communication type of the A-IoT device is the active transmission communication type.

Through the embodiments described above in the present disclosure, the A-IoT device may directly indicate its communication type through information carried in the random access message, with a simple and direct indication method and high indication efficiency. Alternatively, the A-IoT device may also indirectly indicate its communication type through identifier information of the logical channel for the random access message, without the need to carry additional new information in the random access message, thus achieving high compatibility.

Next, the solutions in the embodiments shown in FIGS. 6 to 10 mentioned above are introduced in Embodiments 1 to 4 hereinafter.

### Embodiment 1: A-IoT devices of different communication types use different uplink frequency-domain transmission resources.

Taking the network device as the base station/cell and the A-IoT device as the UE as an example, the implementation process of this embodiment may be as follows.

After receiving the paging message/query message/polling message/inventory request message transmitted by the network, the UE selects the uplink resource for access transmission according to its communication type.

### A) For the UE of the backscattering communication type

1) The random access is initiated through the first uplink frequency-domain resource.
2) The first uplink frequency-domain resource may be one carrier wave or a plurality of carrier waves. When there are a plurality of carrier waves, the UE may randomly select one carrier wave, or select one carrier wave using a specific method. For example, the UE performs a modulo operation on the number of carrier waves using the device ID or other device identifiers, and selects the carrier wave with the corresponding serial number based on the modulo result. Furthermore, weight factors may be introduced for the plurality of carrier waves, and the UE may randomly select a carrier wave based on these weight factors.
3) The first uplink frequency-domain resource is obtained through a system message broadcast (such as the carrier wave information indicating that the current cell supports backscattering communication), or through the aforementioned paging message/query message/polling message/inventory request message (such as the complete set or a subset of the carrier wave information indicating that the current cell supports backscattering communication).

### B) For the UE of the active transmission communication type

1) The random access is initiated through the second uplink frequency-domain resource.
2) The second uplink frequency-domain resource may be one carrier wave or a plurality of carrier waves. When there are a plurality of carrier waves, the UE may randomly select one carrier wave, or select one carrier wave using a specific method. For example, the UE performs a modulo operation on the number of carrier waves using the device ID or other device identifiers, and selects the carrier wave with the corresponding serial number based on the modulo result. Furthermore, weight factors may be introduced for the plurality of carrier waves, and the UE may randomly select a carrier wave based on these weight factors.
3) The second uplink frequency-domain resource is obtained through a system message broadcast (such as the random access resource configured for the active transmission communication UE in the current cell), or through the paging message/query message/polling message/inventory request message (such as the random access resource configured for the active transmission communication UE for completing the inventory).

The first uplink frequency-domain resource and the second uplink frequency-domain resource do not overlap in the frequency domain.

The beneficial effects of Embodiment 1 include: introducing different uplink frequency-domain resources for backscattering communication and active transmission communication configured by the network, which is conducive to reducing uplink interference between two types of A-IoT devices and improving the access success rate. Secondly, it helps the base station to identify the communication type of the A-IoT device as early as possible and decide how to schedule subsequent terminal transmissions based on the terminal communication type. For example, if the A-IoT device is of an active transmission type, periodic uplink resources are configured.

### Embodiment 2: A-IoT devices of different communication types use different uplink time-domain transmission resources.

Taking the network device as the base station/cell and the A-IoT device as the UE as an example, the implementation process of this embodiment may be as follows.

After receiving the paging message/query message/polling message/inventory request message transmitted by the network, the UE selects the uplink resource for access transmission according to its communication type.

### A) For the terminal of the backscattering communication type

1) The random access is initiated through the first uplink resource.
2) The aforementioned first uplink resource includes a plurality of transmission opportunities across different time domains.
3) The aforementioned first uplink resource is obtained through a system message broadcast (such as the access resource configured for the terminal of the backscattering communication type in the current cell), or through the aforementioned paging message/query message/polling message/inventory request message (such as the complete set or a subset of the access resources configured for the terminal of the backscattering communication type in the current cell).

### B) For the terminal of the active transmission communication type

1) The random access is initiated through the second uplink resource;
2) The aforementioned second uplink resource includes plurality of transmission opportunities across different time domains.
3) The aforementioned second uplink resource is obtained through a system message broadcast (such as the access resource configured for the terminal of the active transmission communication type in the current cell), or through the aforementioned paging message/query message/polling message/inventory request message (such as the complete set or a subset of the access resources configured for the terminal of the active transmission communication type in the current cell).

The aforementioned first uplink resource and the aforementioned second uplink resource do not overlap in the time domain, and they may belong to the same carrier wave or different carrier waves in the frequency domain.

The beneficial effects of Embodiment 2 include: introducing different uplink time-domain resources for backscattering communication and active transmission communication configured by the network, which helps the base station identify the communication type of the A-IoT device as early as possible, and decide how to schedule subsequent terminal transmission based on the communication type of the A-IoT device. For example, if the A-IoT device is of an active transmission type, periodic uplink resources are configured.

### Embodiment 3: A-IoT terminals of different communication types use different code-domain transmission resources.

Taking the network device as the base station/cell and the A-IoT device as the UE as an example, the implementation process of this embodiment may be as follows.

After receiving the paging message/query message/polling message/inventory request message transmitted by the network, the UE selects the uplink resource for access transmission according to its communication type.

### A) For the terminal of the backscattering communication type

1) The random access is initiated through the first uplink resource.
2) The aforementioned first uplink resource includes a plurality of random access preambles.
3) The aforementioned first uplink resource is obtained through a system message broadcast (such as the random access preamble configured for the terminal of the backscattering communication type in the current cell), or through the aforementioned paging message/query message/polling message/inventory request message (such as the complete set or a subset of the random access preambles configured for the terminal of the backscattering communication type in the current cell).

### B) For the terminal of the active transmission communication type.

1) The random access is initiated through the second uplink frequency-domain resource.
2) The aforementioned second uplink resource includes a plurality of random access preambles.
3) The aforementioned second uplink resource is obtained through a system message broadcast (such as the random access preamble configured for the terminal of the active transmission communication type in the current cell), or through the aforementioned paging message/query message/polling message/inventory request message (such as the complete set or subset of random access preambles configured for the terminal of the active transmission communication type in the current cell).

The aforementioned first uplink resource and the aforementioned second uplink resource do not overlap on the random access preamble set, and they may belong to the same carrier wave or different carrier waves in the frequency domain and may belong to the same or different transmission opportunities in the time domain.

The beneficial effects of Embodiment 3 include: introducing different preamble resources for backscattering communication and active transmission communication configured by the network, which helps the base station identify the communication type of the A-IoT device as early as possible, and decide how to schedule subsequent terminal transmission based on the communication type of the A-IoT device. For example, if the A-IoT device is of an active transmission type, periodic uplink resources are configured.

### Embodiment 4: During the random access process, the A-IoT device indicates the communication type to the network device.

Taking the network device as the base station/cell and the A-IoT device as the UE as an example, the implementation process of this embodiment may be as follows.

After receiving the paging message/query message/polling message/inventory request message transmitted by the network, the UE uses the uplink resource for random access. During the random access process, the UE indicates its communication type, such as backscattering communication or active transmission communication.
A) It can be indicated through the first message Msg1 in the random access process, such as before/after the preamble, for example, using 1 bit, where the value of 1 indicates backscattering communication and the value of 0 indicates active transmission communication.
B) It can be indicated through the third message Msg3 in the random access process, such as a displayed 1-bit indicator, or through the logical channel ID (LCID). For example, LCID xxxx indicates backscattering communication, while LCID yyyy indicates active transmission communication.
C) It can be indicated through the fifth message Msg5 in the random access process, such as a displayed 1-bit indicator.

The beneficial effects of Embodiment 4 include: the A-IoT device indicates its communication type during the random access process, which is conducive to helping the base station decide how to schedule subsequent terminal transmissions based on the communication type of the A-IoT device. For example, if the A-IoT device is of an active transmission type, periodic uplink resources are configured.

The embodiments of the present disclosure disclose an uplink transmission method of an A-IoT device. For A-IoT devices of different communication types, different time/frequency/code-domain transmission resources are used, and the backscattering communication type/active transmission type of the A-IoT device is indicated during the random access process.

Please refer to FIG. 14, which illustrates a block diagram of an uplink transmission apparatus according to some embodiments of the present disclosure. The uplink transmission apparatus is equipped with functions executed by the A-IoT device in any of the methods shown in FIGS. 6 to 10. As shown in FIG. 14, the apparatus includes a transmitting module 1401.

The transmitting module 1401 is configured to perform access transmission with a network device through an uplink resource corresponding to a communication type of the A-IoT device; wherein the uplink resources corresponding to different communication types do not overlap.

In some embodiments, the transmitting module 1401 is configured to perform access transmission with the network device through the uplink resource corresponding to the communication type of the A-IoT device upon receiving an access triggering message.

In some embodiments, the access triggering message includes one or more of : a paging message, a query message, a polling message, or an inventory request message.

In some embodiments, when the communication type is a backscattering communication type, the uplink resource corresponding to the communication type includes a first uplink resource; or when the communication type is an active transmission communication type, the uplink resource corresponding to the communication type includes a second uplink resource; wherein the first uplink resource and the second uplink resource do not overlap.

In some embodiments, the first uplink resource includes a first uplink frequency-domain resource, and the second uplink resource includes a second uplink frequency-domain resource; wherein the first uplink frequency-domain resource and the second uplink frequency-domain resource do not overlap.

In some embodiments, the first uplink frequency-domain resource includes one or more frequency-domain resources; and the second uplink frequency-domain resource includes one or more frequency-domain resources.

In some embodiments, when the communication type of the A-IoT device is the backscattering communication type, and the first uplink frequency-domain resource includes a plurality of frequency-domain resources, the transmitting module 1401 is configured to select, according to a first frequency-domain resource selection method, a frequency-domain resource from the plurality of frequency-domain resources in the first uplink frequency-domain resource to initiate a random access to the network device; or when the communication type of the A-IoT device is the active transmission communication type, and the second uplink frequency-domain resource includes a plurality of frequency-domain resources, the transmitting module 1401 is configured to select, according to a second frequency-domain resource selection method, a frequency-domain resource from the plurality of frequency-domain resources in the second uplink frequency-domain resource to initiate a random access to the network device.

In some embodiments, the first frequency-domain resource selection method includes one or more of the following methods: randomly selecting a frequency-domain resource, selecting a frequency-domain resource based on identifier information of the A-IoT device, and selecting a frequency-domain resource based on s weight of the frequency-domain resource; and the second frequency-domain resource selection method includes one or more of the following methods: randomly selecting the frequency-domain resource, selecting the frequency-domain resource based on the identifier information of the A-IoT device, and selecting the frequency-domain resource based on the weight of the frequency-domain resource.

In some embodiments, when the communication type of the A-IoT device is the backscattering communication type, the first uplink frequency-domain resource is configured to the A-IoT device by the network device through at least one of the following methods: a system message, or an access triggering message; or when the communication type of the A-IoT device is the active transmission communication type, the second uplink frequency-domain resource is configured to the A-IoT device by the network device through at least one of the following methods: a system message, or an access triggering message.

In some embodiments, the frequency-domain resource is a carrier wave.

In some embodiments, the first uplink resource includes a first uplink time-domain resource, and the second uplink resource includes a second uplink time-domain resource; wherein the first uplink time-domain resource and the second uplink time-domain resource do not overlap.

In some embodiments, the first uplink time-domain resource includes one or more time-domain resources; and the second uplink time-domain resource includes one or more time-domain resources.

In some embodiments, when the communication type of the A-IoT device is the backscattering communication type, and the first uplink time-domain resource includes a plurality of time-domain resources, the transmitting module 1401 is configured to select, according to a first time-domain resource selection method, one time-domain resource from the plurality of time-domain resources in the first uplink time-domain resource to initiate random access to the network device; or when the communication type of the A-IoT device is the active transmission communication type, and the second uplink time-domain resource includes a plurality of time-domain resources, the transmitting module 1401 is configured to select, according to a second time-domain resource selection method, one time-domain resource from the plurality of time-domain resources in the second uplink time-domain resource to initiate random access to the network device.

In some embodiments, the first time-domain resource selection method includes one or more of the following methods: randomly selecting a time-domain resource, selecting a time-domain resource based on identifier information of the A-IoT device, or selecting a time-domain resource based on a weight of the time-domain resource; and the second time-domain resource selection method includes one or more of the following methods: randomly selecting the time-domain resource, selecting the time-domain resource based on the identifier information of the A-IoT device, or selecting the time-domain resource based on the weight of the time-domain resource.

In some embodiments, when the communication type of the A-IoT device is the backscattering communication type, the first uplink time-domain resource is configured to the A-IoT device by the network device through at least one of the following methods: a system message, or an access triggering message; or when the communication type of the A-IoT device is the active transmission communication type, the second uplink time-domain resource is configured to the A-IoT device by the network device through at least one of the following methods: a system message, or an access triggering message.

In some embodiments, the time-domain resource is a transmission opportunity.

In some embodiments, the first uplink resource includes a first uplink code-domain resource, and the second uplink resource includes a second uplink code-domain resource; wherein the first uplink code-domain resource and the second uplink code-domain resource do not overlap.

In some embodiments, the first uplink code-domain resource includes one or more code-domain resources; and the second uplink code-domain resource includes one or more code-domain resources.

In some embodiments, when the communication type of the A-IoT device is the backscattering communication type, and the first uplink code-domain resource includes a plurality of code-domain resources, the transmitting module 1401 is configured to select, according to a first code-domain resource selection method, one code-domain resource from the plurality of code-domain resources in the first uplink code-domain resource to initiate random access to the network device; or when the communication type of the A-IoT device is the active transmission communication type, and the second uplink code-domain resource includes a plurality of code-domain resources, the transmitting module 1401 is configured to select, according to a second code-domain resource selection method, one code-domain resource from the plurality of code-domain resources in the second uplink code-domain resource to initiate random access to the network device.

In some embodiments, the first code-domain resource selection method includes one or more of the following methods: randomly selecting a code-domain resource, selecting a code-domain resource based on identifier information of the A-IoT device, or selecting a code-domain resource based on a weight of the code-domain resource; and the second code-domain resource selection method includes one or more of the following methods: randomly selecting the code-domain resource, selecting the code-domain resource based on the identifier information of the A-IoT device, or selecting the code-domain resource based on the weight of the code-domain resource.

In some embodiments, when the communication type of the A-IoT device is the backscattering communication type, the first uplink code-domain resource is configured to the A-IoT device by the network device through at least one of the following methods: a system message, or an access triggering message; or when the communication type of the A-IoT device is the active transmission communication type, the second uplink code-domain resource is configured to the A-IoT device by the network device through at least one of the following methods: a system message, or an access triggering message.

In some embodiments, the code-domain resource is a random access preamble.

In some embodiments, the apparatus further includes a communication type indicating module, configured to indicate the communication type of the A-IoT device to the network device in the access transmission.

In some embodiments, the communication type indicating module is configured to indicate the communication type of the A-IoT device to the network device through a random access message in the random access process.

In some embodiments, the communication type of the A-IoT device is indicated by information carried in the random access message; and/or, the communication type of the A-IoT device is associated with identifier information of a logical channel for the random access message.

Please refer to FIG. 15, which illustrates a block diagram of an uplink transmission apparatus according to some embodiments of the present disclosure. The uplink transmission apparatus has functions executed by the network device in any of the methods shown in FIGS. 6 to 10 mentioned above. As shown in FIG. 15, the apparatus may include a receiving module 1501.

The receiving module 1501 is configured to receive access transmission performed by an A-IoT device through an uplink resource corresponding to a communication type of the A-IoT device; wherein uplink resources corresponding to different communication types do not overlap.

In some embodiments, the receiving module 1501 is configured to receive the access transmission performed, upon receiving an access triggering message, by the A-IoT device through the uplink resource corresponding to the communication type of the A-IoT device.

In some embodiments, the access triggering message includes one or more of : a paging message, a query message, a polling message, or an inventory request message.

In some embodiments, in the case where the communication type is a backscattering communication type, the uplink resource corresponding to the communication type includes a first uplink resource; or in the case where the communication type is an active transmission communication type, the uplink resource corresponding to the communication type includes a second uplink resource; wherein the first uplink resource and the second uplink resource do not overlap.

In some embodiments, the first uplink resource includes a first uplink frequency-domain resource, and the second uplink resource includes a second uplink frequency-domain resource; wherein the first uplink frequency-domain resource and the second uplink frequency-domain resource do not overlap.

In some embodiments, the first uplink frequency-domain resource includes one or more frequency-domain resources; and the second uplink frequency-domain resource includes one or more frequency-domain resources.

In some embodiments, when the communication type of the A-IoT device is the backscattering communication type, and the first uplink frequency-domain resource includes a plurality of frequency-domain resources, a frequency-domain resource for the A-IoT device to initiate random access transmission is selected from the plurality of frequency-domain resources in the first uplink frequency-domain resource according to a first frequency-domain resource selection method; or when the communication type of the A-IoT device is the active transmission communication type, and the second uplink frequency-domain resource includes a plurality of frequency-domain resources, the frequency-domain resource for the A-IoT device to initiate random access transmission is selected from the plurality of frequency-domain resources in the second uplink frequency-domain resource according to a second frequency-domain resource selection method.

In some embodiments, the first frequency-domain resource selection method includes one or more of the following methods: randomly selecting a frequency-domain resource, selecting a frequency-domain resource based on identifier information of the A-IoT device, or selecting a frequency-domain resource based on a weight of the frequency-domain resource; and the second frequency-domain resource selection method includes one or more of the following methods: randomly selecting the frequency-domain resource, selecting the frequency-domain resource based on the identifier information of the A-IoT device, or selecting the frequency-domain resource based on the weight of the frequency-domain resource.

In some embodiments, when the communication type of the A-IoT device is the backscattering communication type, the first uplink frequency-domain resource is configured to the A-IoT device by the network device through at least one of the following methods: a system message, or an access triggering message; or when the communication type of the A-IoT device is the active transmission communication type, the second uplink frequency-domain resource is configured to the A-IoT device by the network device through at least one of the following methods: a system message, or an access triggering message.

In some embodiments, the frequency-domain resource is a carrier wave.

In some embodiments, the first uplink resource includes a first uplink time-domain resource, and the second uplink resource includes a second uplink time-domain resource; wherein the first uplink time-domain resource and the second uplink time-domain resource do not overlap.

In some embodiments, the first uplink time-domain resource includes one or more time-domain resources; and the second uplink time-domain resource includes one or more time-domain resources.

In some embodiments, when the communication type of the A-IoT device is the backscattering communication type, and the first uplink time-domain resource includes a plurality of time-domain resources, a time-domain resource for the A-IoT device to initiate random access transmission is selected from the plurality of time-domain resources in the first uplink time-domain resource according to a first time-domain resource selection method; or when the communication type of the A-IoT device is the active transmission communication type, and the second uplink time-domain resource includes a plurality of time-domain resources, the time-domain resource for the A-IoT device to initiate random access transmission is selected from the plurality of time-domain resources in the second uplink time-domain resource according to a second time-domain resource selection method.

In some embodiments, the first time-domain resource selection method includes one or more of the following methods: randomly selecting a time-domain resource, selecting a time-domain resource based on identifier information of the A-IoT device, or selecting a time-domain resource based on a weight of the time-domain resource; and the second time-domain resource selection method includes one or more of the following methods: randomly selecting the time-domain resource, selecting the time-domain resource based on the identifier information of the A-IoT device, or selecting the time-domain resource based on the weight of the time-domain resource.

In some embodiments, when the communication type of the A-IoT device is the backscattering communication type, the first uplink time-domain resource is configured to the A-IoT device by the network device through at least one of the following methods: a system message or an access triggering message; or when the communication type of the A-IoT device is the active transmission communication type, the second uplink time-domain resource is configured to the A-IoT device by the network device through at least one of the following methods: a system message or an access triggering message.

In some embodiments, the time-domain resource is a transmission opportunity.

In some embodiments, the first uplink resource includes a first uplink code-domain resource, and the second uplink resource includes a second uplink code-domain resource; wherein the first uplink code-domain resource and the second uplink code-domain resource do not overlap.

In some embodiments, the first uplink code-domain resource includes one or more code-domain resources; and the second uplink code-domain resource includes one or more code-domain resources.

In some embodiments, when the communication type of the A-IoT device is the backscattering communication type, and the first uplink code-domain resource includes a plurality of code-domain resources, the code-domain resource for the A-IoT device to initiate random access transmission is a code-domain resource selected from the plurality of code-domain resources in the first uplink code-domain resource according to a first code-domain resource selection method; or when the communication type of the A-IoT device is the active transmission communication type, and the second uplink code-domain resource includes a plurality of code-domain resources, the code-domain resource for the A-IoT device to initiate random access transmission is a code-domain resource selected from the plurality of code-domain resources in the second uplink code-domain resource according to a second code-domain resource selection method.

In some embodiments, the first code-domain resource selection method includes one or more of the following methods: randomly selecting a code-domain resource, selecting a code-domain resource based on identifier information of the A-IoT device, or selecting a code-domain resource based on a weight of the code-domain resource; and the second code-domain resource selection method includes one or more of the following methods: randomly selecting the code-domain resource, selecting the code-domain resource based on the identifier information of the A-IoT device, or selecting the code-domain resource based on the weight of the code-domain resource.

In some embodiments, when the communication type of the A-IoT device is the backscattering communication type, the first uplink code-domain resource is configured to the A-IoT device by the network device through at least one of the following methods: a system message, or an access triggering message; or when the communication type of the A-IoT device is the active transmission communication type, the second uplink code-domain resource is configured to the A-IoT device by the network device through at least one of the following methods: a system message, or an access triggering message.

In some embodiments, the code-domain resource is a random access preamble.

In some embodiments, the apparatus further includes: a communication type obtaining module, configured to obtain the communication type of the A-IoT device indicated by the A-IoT device in the access transmission.

In some embodiments, the communication type obtaining module is configured to obtain the communication type of the A-IoT device indicated by the A-IoT device through a random access message during the random access process.

In some embodiments, the communication type of the A-IoT device is indicated by information carried in the random access message; and/or, the communication type of the A-IoT device is associated with identifier information of a logical channel for the random access message.

Please refer to FIG. 16, which illustrates a block diagram of an uplink transmission apparatus according to some embodiments of the present disclosure. The uplink transmission apparatus is capable of implementing the functions executed by the A-IoT device in any of the methods shown in FIGS. 6 to 10. As shown in FIG. 16, the apparatus may include a communication type indicating module 1601.

The communication type indicating module 1601 is used to indicate a communication type of an A-IoT device to the network device during an access transmission process with a network device.

In some embodiments, the communication type indicating module 1601 is configured to indicate the communication type of the A-IoT device to the network device through a random access message in a random access process.

In some embodiments, the communication type of the A-IoT device is indicated by information carried in the random access message; and/or, the communication type of the A-IoT device is associated with identifier information of a logical channel for the random access message.

Please refer to FIG. 17, which illustrates a block diagram of an uplink transmission apparatus according to some embodiment of the present disclosure. The uplink transmission apparatus is capable of implementing the functions executed by the network device in any of the methods shown in FIGS. 6 to 10 mentioned above. As shown in FIG. 17, the apparatus may include a communication type obtaining module 1701.

The communication type obtaining module 1701 is used to obtain a communication type of an A-IoT device indicated by the A-IoT device during an access transmission process with the network device.

In some embodiments, the communication type obtaining module 1701 is configured to obtain the communication type of the A-IoT device indicated by the A-IoT device through random access message during a random access process.

In some embodiments, the communication type of the A-IoT device is indicated by information carried in the random access message; and/or, the communication type of the A-IoT device is associated with identifier information of a logical channel for the random access message.

It should be noted that the apparatuses provided in the above embodiments is exemplified only based on the division of the various functional modules when achieving their functions. In practical applications, the above functions can be allocated to different functional modules according to actual needs, that is, the content structure of the device can be divided into different functional modules to achieve all or part of the functions described above.

Regarding the apparatuses in the aforementioned embodiments, the specific ways in which each module performs operations have been described in detail in the embodiments related to the method, and will not be elaborated here.

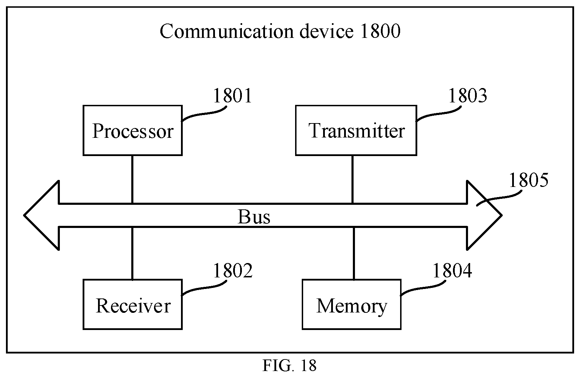

Please refer to FIG. 18, which illustrates the schematic structural diagram of a communication device 1800 according to some embodiments of the present disclosure. The communication device 1800 may include: a processor 1801, a receiver 1802, a transmitter 1803, a memory 1804, and a bus 1805.

The processor 1801 includes one or more processing cores, and executes various functional applications and information processing by running software programs and modules.

The receiver 1802 and the transmitter 1803 may be implemented as a communication component, which may be a communication chip. This communication chip may also be referred to as a transceiver. The memory 1804 is connected to the processor 1801 through the bus 1805. The memory 1804 may be used to store computer programs, and the processor 1801 is used to run these computer programs, thereby implementing the various steps in the aforementioned method embodiments.

In addition, the memory 1804 may be implemented by any type of volatile or non-volatile storage device, or a combination thereof. The volatile or non-volatile storage device includes, but is not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In some exemplary embodiments, when the communication device 1800 is implemented as the aforementioned network device, the receiver 1802 and processor 1801 run the computer programs, enabling the communication device to implement the various steps performed by the network device in the methods shown in FIGS. 6 to 10.

In some exemplary embodiments, when the communication device 1800 is implemented as the A-IoT device as described above, the transmitter 1803 runs the computer programs, enabling the communication device to implement the various steps performed by the A-IoT device in the methods shown in FIGS. 6 to 10.

The embodiments of the present disclosure further provide a computer-readable storage medium, in which computer programs are stored. The computer programs are loaded and run by a processor to implement all or part of the steps performed by the network device or the A-IoT device in the methods shown in FIGS. 6 to 10.

The present disclosure also provides a chip. The chip, when operating on a communication device, , causes the communication device to implement all or part of the steps performed by the network device or the A-IoT device in the methods shown in FIGS. 6 to 10 described above.

The present disclosure further provides a computer program product, which includes computer instructions stored in a computer-readable storage medium. The processor of a communication device reads the computer instructions from the computer-readable storage medium and executes them, enabling the communication device to perform all or part of the steps performed by the network device or the A-IoT device in the methods shown in FIGS. 6 to 10.

The present disclosure also provides a computer program run by a processor of a communication device to implement all or part of the steps performed by the network device or the A-IoT device in the methods shown in FIGS. 6 to 10.

A person skilled in the art should be aware that in the foregoing one or more embodiments, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. An uplink transmission method, performed by an ambient Internet of things (A-IoT) device, the method comprising:
performing access transmission with a network device through an uplink resource corresponding to a communication type of the A-IoT device, wherein uplink resources corresponding to different communication types do not overlap.

2. The method according to claim 1, wherein performing the access transmission with the network device through the uplink resource corresponding to the communication type of the A-IoT device comprises:
upon receiving an access triggering message, performing the access transmission with the network device through the uplink resource corresponding to the communication type of the A-IoT device.

3. The method according to claim 2, wherein the access triggering message comprises one or more of:
a paging message, a query message, a polling message, or an inventory request message.

4. The method according to any one of claims 1 to 3, wherein
in a case where the communication type is a backscattering communication type, the uplink resource corresponding to the communication type comprises a first uplink resource; or
in a case where the communication type is an active transmission communication type, the uplink resource corresponding to the communication type comprises a second uplink resource;
wherein the first uplink resource and the second uplink resource do not overlap.

5. The method according to claim 4, wherein the first uplink resource comprises a first uplink frequency-domain resource, and the second uplink resource comprises a second uplink frequency-domain resource;
wherein the first uplink frequency-domain resource and the second uplink frequency-domain resource do not overlap.

6. The method according to claim 5, wherein
the first uplink frequency-domain resource comprises one or more frequency-domain resources; and
the second uplink frequency-domain resource comprises one or more frequency-domain resources.

7. The method according to claim 6, wherein
in a case where the communication type of the A-IoT device is the backscattering communication type, and the first uplink frequency-domain resource comprises a plurality of frequency-domain resources, performing the access transmission with the network device through the uplink resource corresponding to the communication type of the A-IoT device comprises:
according to a first frequency-domain resource selection method, selecting a frequency-domain resource from the plurality of frequency-domain resources in the first uplink frequency-domain resource to initiate a random access to the network device; or
in a case where the communication type of the A-IoT device is the active transmission communication type, and the second uplink frequency-domain resource comprises a plurality of frequency-domain resources, performing the access transmission with the network device through the uplink resource corresponding to the communication type of the A-IoT device comprises:
according to a second frequency-domain resource selection method, selecting a frequency-domain resource from the plurality of frequency-domain resources in the second uplink frequency-domain resource to initiate a random access to the network device.

8. The method according to claim 7, wherein
the first frequency-domain resource selection method comprises one or more of: randomly selecting a frequency-domain resource, selecting a frequency-domain resource based on identifier information of the A-IoT device, or selecting a frequency-domain resource based on a weight of the frequency-domain resource; and
the second frequency-domain resource selection method comprises one or more of: randomly selecting the frequency-domain resource, selecting the frequency-domain resource based on the identifier information of the A-IoT device, or selecting the frequency-domain resource based on the weight of the frequency-domain resource.

9. The method according to any one of claims 5 to 8, wherein
in the case where the communication type of the A-IoT device is the backscattering communication type, the first uplink frequency-domain resource is configured to the A-IoT device by the network device through at least one of: a system message, or an access triggering message; or
in the case where the communication type of the A-IoT device is the active transmission communication type, the second uplink frequency-domain resource is configured to the A-IoT device by the network device through at least one of: a system message, or an access triggering message.

10. The method according to any one of claims 6 to 8, wherein the frequency-domain resource is a carrier wave.

11. The method according to any one of claims 4 to 10, wherein the first uplink resource comprises a first uplink time-domain resource, and the second uplink resource comprises a second uplink time-domain resource;
wherein the first uplink time-domain resource and the second uplink time-domain resource do not overlap.

12. The method according to claim 11, wherein
the first uplink time-domain resource comprises one or more time-domain resources; and
the second uplink time-domain resource comprises one or more time-domain resources.

13. The method according to claim 12, wherein,
in a case where the communication type of the A-IoT device is the backscattering communication type, and the first uplink time-domain resource comprises a plurality of time-domain resources, performing the access transmission with the network device through the uplink resource corresponding to the communication type of the A-IoT device comprises:
according to a first time-domain resource selection method, selecting a time-domain resource from the plurality of time-domain resources in the first uplink time-domain resource to initiate a random access to the network device; or
in a case where the communication type of the A-IoT device is the active transmission communication type, and the second uplink time-domain resource comprises a plurality of time-domain resources, performing the access transmission with the network device through the uplink resource corresponding to the communication type of the A-IoT device comprises:
according to a second time-domain resource selection method, selecting a time-domain resource from the plurality of time-domain resources in the second uplink time-domain resource to initiate a random access to the network device.

14. The method according to claim 13, wherein
the first time-domain resource selection method comprises one or more of: randomly selecting a time-domain resource, selecting a time-domain resource based on identifier information of the A-IoT device, or selecting a time-domain resource based on a weight of the time-domain resource; and
the second time-domain resource selection method comprises one or more of: randomly selecting the time-domain resource, selecting the time-domain resource based on the identifier information of the A-IoT device, or selecting the time-domain resource based on the weight of the time-domain resource.

15. The method according to any one of claims 11 to 14, wherein
in the case where the communication type of the A-IoT device is the backscattering communication type, the first uplink time-domain resource is configured to the A-IoT device by the network device through at least one of: a system message, or an access triggering message; or
in the case where the communication type of the A-IoT device is the active transmission communication type, the second uplink time-domain resource is configured to the A-IoT device by the network device through at least one of: a system message, or an access triggering message.

16. The method according to any one of claims 12 to 14, wherein the time-domain resource is a transmission opportunity.

17. The method according to any one of claims 4 to 16, wherein the first uplink resource comprises a first uplink code-domain resource, and the second uplink resource comprises a second uplink code-domain resource;
wherein the first uplink code-domain resource and the second uplink code-domain resource do not overlap.

18. The method according to claim 17, wherein
the first uplink code-domain resource comprises one or more code-domain resources; and
the second uplink code-domain resource comprises one or more code-domain resources.

19. The method according to claim 18, wherein
in a case where the communication type of the A-IoT device is the backscattering communication type, and the first uplink code-domain resource comprises a plurality of code-domain resources, performing the access transmission with the network device through the uplink resource corresponding to the communication type of the A-IoT device comprises:
according to a first code-domain resource selection method, selecting a code-domain resource from the plurality of code-domain resources in the first uplink code-domain resource to initiate a random access to the network device; or
in a case where the communication type of the A-IoT device is the active transmission communication type, and the second uplink code-domain resource comprises a plurality of code-domain resources, performing the access transmission with the network device through the uplink resource corresponding to the communication type of the A-IoT device comprises:
according to a second code-domain resource selection method, selecting a code-domain resource from the plurality of code-domain resources in the second uplink code-domain resource to initiate a random access to the network device.

20. The method according to claim 19, wherein
the first code-domain resource selection method comprises one or more of: randomly selecting a code-domain resource, selecting a code-domain resource based on identifier information of the A-IoT device, or selecting a code-domain resource based on a weight of the code-domain resource; and
the second code-domain resource selection method comprises one or more of: randomly selecting the code-domain resource, selecting the code-domain resource based on the identifier information of the A-IoT device, or selecting the code-domain resource based on the weight of the code-domain resource.

21. The method according to any one of claims 17 to 20, wherein
in the case where the communication type of the A-IoT device is the backscattering communication type, the first uplink code-domain resource is configured to the A-IoT device by the network device through at least one of: a system message, or an access triggering message; or
in the case where the communication type of the A-IoT device is the active transmission communication type, the second uplink code-domain resource is configured to the A-IoT device by the network device through at least one of: a system message, or an access triggering message.

22. The method according to any one of claims 18 to 20, wherein the code-domain resource is a random access preamble.

23. The method according to any one of claims 1 to 22, further comprising:
in the access transmission, indicating the communication type of the A-IoT device to the network device.

24. The method according to claim 23, wherein in the access transmission, indicating the communication type of the A-IoT device to the network device comprises:
indicating the communication type of the A-IoT device to the network device through a random access message during a random access process.

25. The method according to claim 24, wherein
the communication type of the A-IoT device is indicated by information carried in the random access message; and/or
the communication type of the A-IoT device is associated with identifier information of a logical channel for the random access message.

26. An uplink transmission method, performed by a network device, the method comprising:
receiving access transmission performed by an ambient Internet of things (A-IoT) device through an uplink resource corresponding to a communication type of the A-IoT device;
wherein uplink resources corresponding to different communication types do not overlap.

27. The method according to claim 26, wherein receiving the access transmission performed by the A-IoT device through the uplink resource corresponding to the communication type of the A-IoT device comprises:
receiving the access transmission performed, upon receiving an access triggering message, by the A-IoT device through the uplink resource corresponding to the communication type of the A-IoT device.

28. The method according to claim 27, wherein the access triggering message comprises one or more of:
a paging message, a query message, a polling message, or an inventory request message.

29. The method according to any one of claims 26 to 28, wherein
in a case where the communication type is a backscattering communication type, the uplink resource corresponding to the communication type comprises a first uplink resource; or
in a case where the communication type is an active transmission communication type, the uplink resource corresponding to the communication type comprises a second uplink resource;
wherein the first uplink resource and the second uplink resource do not overlap.

30. The method according to claim 29, wherein the first uplink resource comprises a first uplink frequency-domain resource, and the second uplink resource comprises a second uplink frequency-domain resource;
wherein the first uplink frequency-domain resource and the second uplink frequency-domain resource do not overlap.

31. The method according to claim 30, wherein
the first uplink frequency-domain resource comprises one or more frequency-domain resources; and
the second uplink frequency-domain resource comprises one or more frequency-domain resources.

32. The method according to claim 31, wherein
in a case where the communication type of the A-IoT device is the backscattering communication type, and the first uplink frequency-domain resource comprises a plurality of frequency-domain resources, a frequency-domain resource for the A-IoT device to initiate random access transmission is a frequency-domain resource selected from the plurality of frequency-domain resources in the first uplink frequency-domain resource according to a first frequency-domain resource selection method; or
in a case where the communication type of the A-IoT device is the active transmission communication type, and the second uplink frequency-domain resource comprises a plurality of frequency-domain resources, a frequency-domain resource for the A-IoT device to initiate random access transmission is a frequency-domain resource selected from the plurality of frequency-domain resources in the second uplink frequency-domain resource according to a second frequency-domain resource selection method.

33. The method according to claim 32, wherein
the first frequency-domain resource selection method comprises one or more of: randomly selecting a frequency-domain resource, selecting a frequency-domain resource based on identifier information of the A-IoT device, or selecting a frequency-domain resource based on a weight of the frequency-domain resource; and
the second frequency-domain resource selection method comprises one or more of: randomly selecting the frequency-domain resource, selecting the frequency-domain resource based on the identifier information of the A-IoT device, or selecting the frequency-domain resource based on the weight of the frequency-domain resource.

34. The method according to any one of claims 30 to 33, wherein,
in the case where the communication type of the A-IoT device is the backscattering communication type, the first uplink frequency-domain resource is configured to the A-IoT device by the network device through at least one of: a system message, or an access triggering message; or
in the case where the communication type of the A-IoT device is the active transmission communication type, the second uplink frequency-domain resource is configured to the A-IoT device by the network device through at least one of: a system message, or an access triggering message.

35. The method according to any one of claims 31 to 33, wherein the frequency-domain resource is a carrier wave.

36. The method according to any one of claims 29 to 35, wherein the first uplink resource comprises a first uplink time-domain resource, and the second uplink resource comprises a second uplink time-domain resource;
wherein the first uplink time-domain resource and the second uplink time-domain resource do not overlap.

37. The method according to claim 36, wherein
the first uplink time-domain resource comprises one or more time-domain resources; and
the second uplink time-domain resource comprises one or more time-domain resources.

38. The method according to claim 37, wherein
in a case where the communication type of the A-IoT device is the backscattering communication type, and the first uplink time-domain resource comprises a plurality of time-domain resources, a time-domain resource for the A-IoT device to initiate random access transmission is a time-domain resource selected from the plurality of time-domain resources in the first uplink time-domain resource according to a first time-domain resource selection method; or
in a case where the communication type of the A-IoT device is the active transmission communication type, and the second uplink time-domain resource comprises a plurality of time-domain resources, a time-domain resource for the A-IoT device to initiate random access transmission is a time-domain resource selected from the plurality of time-domain resources in the second uplink time-domain resource according to a second time-domain resource selection method.

39. The method according to claim 38, wherein
the first time-domain resource selection method includes one or more of: randomly selecting a time-domain resource, selecting a time-domain resource based on identifier information of the A-IoT device, or selecting a time-domain resource based on a weight of the time-domain resource; and
the second time-domain resource selection method comprises one or more of: randomly selecting the time-domain resource, selecting the time-domain resource based on the identifier information of the A-IoT device, or selecting the time-domain resource based on the weight of the time-domain resource.

40. The method according to any one of claims 36 to 39, wherein
in the case where the communication type of the A-IoT device is the backscattering communication type, the first uplink time-domain resource is configured to the A-IoT device by the network device through at least one of: a system message, or an access triggering message; or
in the case where the communication type of the A-IoT device is the active transmission communication type, the second uplink time-domain resource is configured to the A-IoT device by the network device through at least one of: a system message, or an access triggering message.

41. The method according to any one of claims 37 to 39, wherein the time-domain resource is a transmission opportunity.

42. The method according to any one of claims 29 to 41, wherein the first uplink resource comprises a first uplink code-domain resource, and the second uplink resource comprises a second uplink code-domain resource;
wherein the first uplink code-domain resource and the second uplink code-domain resource do not overlap.

43. The method according to claim 42, wherein
the first uplink code-domain resource comprises one or more code-domain resources; and
the second uplink code-domain resource comprises one or more code-domain resources.

44. The method according to claim 43, wherein
in a case where the communication type of the A-IoT device is the backscattering communication type, and the first uplink code-domain resource comprises a plurality of code-domain resources, a code-domain resource for the A-IoT device to initiate random access transmission is a code-domain resource selected from the plurality of code-domain resources in the first uplink code-domain resource according to a first code-domain resource selection method; or
in a case where the communication type of the A-IoT device is the active transmission communication type, and the second uplink code-domain resource comprises a plurality of code-domain resources, a code-domain resource for the A-IoT device to initiate random access transmission is a code-domain resource selected from the plurality of code-domain resources in the second uplink code-domain resource according to a second code-domain resource selection method.

45. The method according to claim 44, wherein
the first code-domain resource selection method comprises one or more of: randomly selecting a code-domain resource, selecting a code-domain resource based on identifier information of the A-IoT device, or selecting a code-domain resource based on a weight of the code-domain resource; and
the second code-domain resource selection method comprises one or more of: randomly selecting the code-domain resource, selecting the code-domain resource based on the identifier information of the A-IoT device, or selecting the code-domain resource based on the weight of the code-domain resource.

46. The method according to any one of claims 42 to 45, wherein
in the case where the communication type of the A-IoT device is the backscattering communication type, the first uplink code-domain resource is configured to the A-IoT device by the network device through at least one of: a system message, or an access triggering message; or
in the case where the communication type of the A-IoT device is the active transmission communication type, the second uplink code-domain resource is configured to the A-IoT device by the network device through at least one of: a system message, or an access triggering message.

47. The method according to any one of claims 43 to 45, wherein the code-domain resource is a random access preamble.

48. The method according to any one of claims 26 to 47, further comprising:
in the access transmission, obtaining the communication type of the A-IoT device indicated by the A-IoT device.

49. The method according to claim 48, wherein in the access transmission, obtaining the communication type of the A-IoT device indicated by the A-IoT device comprises:
obtaining the communication type of the A-IoT device indicated by the A-IoT device through a random access message during a random access process.

50. The method according to claim 49, wherein
the communication type of the A-IoT device is indicated by information carried in the random access message; and/or
the communication type of the A-IoT device is associated with identifier information of a logical channel for the random access message.

51. An uplink transmission method, performed by an ambient Internet of things (A-IoT) device, the method comprising:
during an access transmission process with a network device, indicating a communication type of the A-IoT device to the network device.

52. The method according to claim 51, wherein during the process of the access transmission with the network device, indicating the communication type of the A-IoT device to the network device comprises:
indicating the communication type of the A-IoT device to the network device through a random access message during a random access process.

53. The method according to claim 52, wherein
the communication type of the A-IoT device is indicated by information carried in the random access message; and/or
the communication type of the A-IoT device is associated with identifier information of a logical channel for the random access message.

54. An uplink transmission method, performed by a network device, the method comprising:
obtaining a communication type of an ambient Internet of things (A-IoT) device indicated by the A-IoT device during an access transmission process with the network device.

55. The method according to claim 54, wherein obtaining the communication type of the A-IoT device indicated by the A-IoT device during the access transmission process with the network device comprises:
obtaining the communication type of the A-IoT device indicated by the A-IoT device through a random access message during a random access process.

56. The method according to claim 55, wherein
the communication type of the A-IoT device is indicated by information carried in the random access message; and/or
the communication type of the A-IoT device is associated with identifier information of a logical channel for the random access message.

57. An uplink transmission apparatus, comprising:
a transmitting module, configured to perform access transmission with a network device through an uplink resource corresponding to the communication type of an ambient Internet of things (A-IoT) device;
wherein uplink resources corresponding to different communication types do not overlap.

58. An uplink transmission apparatus, comprising:
a receiving module, configured to receive access transmission performed by an ambient Internet of things (A-IoT) device through an uplink resource corresponding to a communication type of the A-IoT device;
wherein uplink resources corresponding to different communication types do not overlap.

59. An uplink transmission apparatus, comprising:
a communication type indicating module, configured to indicate a communication type of an ambient Internet of things (A-IoT) device to a network device during an access transmission process with the network device.

60. An uplink transmission apparatus, comprising:
a communication type obtaining module, configured to obtain a communication type of an ambient Internet of things (A-IoT) device indicated by the A-IoT device during an access transmission process with a network device.

61. An ambient Internet of things (A-IoT) device, comprising: a processor, a memory, and a transceiver;
wherein the memory stores computer programs, and the processor runs the computer programs to cause the A-IoT device to perform the uplink transmission method according to any of claims 1 to 25 and 51 to 53.

62. A network device, comprising: a processor, a memory, and a transceiver;
wherein the memory stores computer programs, and the processor runs the computer programs to cause the network device to perform the uplink transmission method according to any of claims 26 to 50 and 54 to 56.

63. A computer-readable storage medium, storing: computer programs, which when run by a processor of a communication device, cause the communication device to perform the uplink transmission method according to any one of claims 1 to 56.

64. A chip, comprising: integrated circuitry and application programs, and the chip, when operating on a communication device, causes the communication device to perform the uplink transmission method according to any one of claims 1 to 56.

65. A computer program product, comprising: computer instructions stored in a computer-readable storage medium; wherein a processor of a communication device reads the computer instructions from the computer-readable storage medium and executes the computer instructions, so that the communication device performs the uplink transmission method according to any one of claims 1 to 56.

66. A computer program, wherein the computer program is run by a processor of a communication device, so that the communication device performs the uplink transmission method according to any one of claims 1 to 56.
